# EUROPEAN PATENT APPLICATION

(11) **EP 4 601 372 A1**
(43) Date of publication of application: **13.08.2025**
(21) Application number: 22968095.4
(22) Date of filing: 12.12.2022
(51) Int. Cl.: H04W 72/04

(54) **TRANSMISSION RESOURCE INDICATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); FU, Zhe, Dongguan, Guangdong 523860 (CN); ZHANG, Yi, Dongguan, Guangdong 523860 (CN)
(74) Representative: Penza, Giancarlo
(86) International application number: PCT/CN2022/138487
(87) International publication number: WO 2024/124381

(57) **Abstract**

Embodiments of the disclosure provide a transmission resource indication method and apparatus, a device, and a storage medium. The method includes that: a terminal device sends first information in a first physical channel occasion, the first information being used for indicating at least one second physical channel occasion, the first physical channel occasion and the second physical channel occasion are located in a first cycle, the second physical channel occasion is an unused physical channel occasion, and the second physical channel occasion and the first physical channel occasion meet a first time constraint condition.

## Description

### TECHNICAL FIELD

Embodiments of the disclosure relate to the technical field of mobile communications, and in particular to a method and apparatus for indicating a transmission resource, a device, and a storage medium.

### BACKGROUND

In related art, it is supported to configure, in a cycle, multiple physical channel occasions, namely transmission resources, such as a Physical Uplink Shared Channel (PUSCH) occasion and a Physical Uplink Control Channel (PUCCH) occasion. In a situation that multiple physical channel occasions in a cycle are not all occupied, a terminal device may inform a base station of an unused physical channel occasion in the cycle, so that the base station can reallocate the unused physical channel occasion, so as to improve system efficiency. There is no effective solution in related art about how a terminal device effectively informs a base station of an unused physical channel occasion in a cycle.

### SUMMARY

Embodiments of the disclosure provide a method and apparatus for indicating a transmission resource, a device, and a storage medium.

A method for indicating a transmission resource according to embodiments of the disclosure includes: transmitting, by a terminal device in a first physical channel occasion, first information which is for indicating at least one second physical channel occasion, wherein the first physical channel occasion and the at least one second physical channel occasion are located within a first cycle, the second physical channel occasion is an unused physical channel occasion, and a first time constraint condition is met between the second physical channel occasion and the first physical channel occasion.

A method for indicating a transmission resource according to embodiments of the disclosure includes: transmitting, by a terminal device in a first physical channel occasion, first information, wherein the first information is for indicating whether a physical channel occasion starting from a second physical channel occasion within a first cycle is used or unused, the first physical channel occasion and the second physical channel occasion are located within the first cycle, and a first time constraint condition is met between the second physical channel occasion and the first physical channel occasion.

A method for indicating a transmission resource according to embodiments of the disclosure includes: receiving, by a network device in a first physical channel occasion, first information which is for indicating at least one second physical channel occasion, wherein the first physical channel occasion and the at least one second physical channel occasion are located within a first cycle, the second physical channel occasion is an unused physical channel occasion, and a first time constraint condition is met between the second physical channel occasion and the first physical channel occasion.

A method for indicating a transmission resource according to embodiments of the disclosure includes: receiving, by a network device in a first physical channel occasion, first information, wherein the first information is for indicating whether a physical channel occasion starting from a second physical channel occasion within a first cycle is used or unused, the first physical channel occasion and the second physical channel occasion are located within the first cycle, and a first time constraint condition is met between the second physical channel occasion and the first physical channel occasion.

A terminal device according to embodiments of the disclosure includes: a first communication unit, configured to transmit, in a first physical channel occasion, first information which is for indicating at least one second physical channel occasion, wherein the first physical channel occasion and the at least one second physical channel occasion are located within a first cycle, the second physical channel occasion is an unused physical channel occasion, and a first time constraint condition is met between the second physical channel occasion and the first physical channel occasion.

A terminal device according to embodiments of the disclosure includes: a second communication unit, configured to transmit first information in a first physical channel occasion, wherein the first information is for indicating whether a physical channel occasion starting from a second physical channel occasion within a first cycle is used or unused, the first physical channel occasion and the second physical channel occasion are located within the first cycle, and a first time constraint condition is met between the second physical channel occasion and the first physical channel occasion.

A network device according to embodiments of the disclosure includes: a third communication unit, configured to receive, in a first physical channel occasion, first information which is for indicating at least one second physical channel occasion, wherein the first physical channel occasion and the at least one second physical channel occasion are located within a first cycle, the second physical channel occasion is an unused physical channel occasion, and a first time constraint condition is met between the second physical channel occasion and the first physical channel occasion.

A network device according to embodiments of the disclosure includes: a fourth communication unit, configured to receive first information in a first physical channel occasion, wherein the first information is for indicating whether a physical channel occasion starting from a second physical channel occasion within a first cycle is used or unused, the first physical channel occasion and the second physical channel occasion are located within the first cycle, and a first time constraint condition is met between the second physical channel occasion and the first physical channel occasion.

A communication device according to embodiments of the disclosure may be a terminal device in above solutions. The communication device includes a processor and a memory. The memory is configured to store a computer program, and the processor is configured to call and run the computer program stored in the memory to perform the above method for indicating a transmission resource performed by a terminal device.

A communication device according to embodiments of the disclosure may be a network device in above solutions. The communication device includes a processor and a memory. The memory is configured to store a computer program, and the processor is configured to call and run the computer program stored in the memory to perform the above method for indicating a transmission resource performed by a network device.

A chip according to embodiments of the disclosure is configured to implement the above methods for indicating a transmission resource.

In particular, the chip includes a processor configured to call and run a computer program from a memory to enable a device installed with the chip to perform the above method for indicating a transmission resource.

A computer-readable storage medium according to embodiments of the disclosure has stored thereon a computer program that enables a computer to perform the above method for indicating a transmission resource.

A computer program product according to embodiments of the disclosure includes computer program instructions that enable a computer to perform the above methods for indicating a transmission resource.

A computer program according to embodiments of the disclosure, when run on a computer, enables the computer to implement the above methods for indicating a transmission resource.

Through the above technical solutions, a terminal device may transmit first information to a network device in a first physical channel occasion in a first cycle. The first information indicates an unused second physical channel occasion within the first cycle, and the second physical channel occasion and the first physical channel occasion satisfy a first time constraint condition. This allows the terminal device to notify the network device of an unused physical channel opportunity using a physical channel opportunity that has a time constraint relationship with the unused physical channel opportunity. In this way, the position of the reported unused physical channel occasion is limited based on the physical channel occasion where the first information is located, thereby avoiding invalid reporting by the terminal device that exceeds the processing capability of the network device, and improving the system efficiency.

### BRIEF DESCRIPTION OF THE DRAWINGS

The drawings described herein serve for further understanding of the disclosure, and constitute a part of the disclosure. Exemplary embodiments of the disclosure and description thereof are used to explain the disclosure and do not form inappropriate limitation of the disclosure. In the drawings:
FIG. 1 illustrates a schematic diagram of an application scenario according to embodiments of the disclosure.
FIG. 2 illustrates a first schematic diagram of physical uplink shared channel (PUSCH) occasions according to embodiments of the disclosure.
FIG. 3 illustrates a first optional schematic flowchart of a method for indicating a transmission resource according to embodiments of the disclosure.
FIG. 4 illustrates a second optional schematic flowchart of a method for indicating a transmission resource according to embodiments of the disclosure.
FIG. 5 illustrates a third optional schematic flowchart of a method for indicating a transmission resource according to embodiments of the disclosure.
FIG. 6 illustrates a second schematic diagram of physical uplink shared channel (PUSCH) occasions according to embodiments of the disclosure.
FIG. 7 illustrates a third schematic diagram of physical uplink shared channel (PUSCH) occasions according to embodiments of the disclosure.
FIG. 8 illustrates a fourth optional schematic flowchart of a method for indicating a transmission resource according to embodiments of the disclosure.
FIG. 9 illustrates a fifth optional schematic flowchart of a method for indicating a transmission resource according to embodiments of the disclosure.
FIG. 10 illustrates a sixth optional schematic flowchart of a method for indicating a transmission resource according to embodiments of the disclosure.
FIG. 11 illustrates a fourth schematic diagram of physical uplink shared channel (PUSCH) occasions according to embodiments of the disclosure.
FIG. 12 illustrates a fifth schematic diagram of physical uplink shared channel (PUSCH) occasions according to embodiments of the disclosure.
FIG. 13 illustrates a sixth schematic diagram of physical uplink shared channel (PUSCH) occasions according to embodiments of the disclosure.
FIG. 14 illustrates a seventh schematic diagram of physical uplink shared channel (PUSCH) occasions according to embodiments of the disclosure.
FIG. 15 illustrates an eighth schematic diagram of physical uplink shared channel (PUSCH) occasions according to embodiments of the disclosure.
FIG. 16 illustrates a first optional schematic structural diagram of a terminal device according to embodiments of the disclosure.
FIG. 17 illustrates a second optional schematic structural diagram of a terminal device according to embodiments of the disclosure.
FIG. 18 illustrates a first optional schematic structural diagram of a network device according to embodiments of the disclosure.
FIG. 19 illustrates a second optional schematic structural diagram of a network device according to embodiments of the disclosure.
FIG. 20 illustrates a schematic structural diagram of a communication device according to embodiments of the disclosure.
FIG. 21 illustrates a schematic structural diagram of a chip according to embodiments of the disclosure.
FIG. 22 illustrates a schematic block diagram of a communication system according to embodiments of the disclosure.

### DETAILED DESCRIPTION

Technical solutions of the embodiments of the disclosure will be described below in conjunction with the drawings of the embodiments of the disclosure. Apparently, the described embodiments are part of rather than all of the embodiments of the disclosure. All other embodiments obtained by those skilled in the art based on the embodiments of the disclosure without any inventive effort shall fall within the scope of protection of the disclosure.

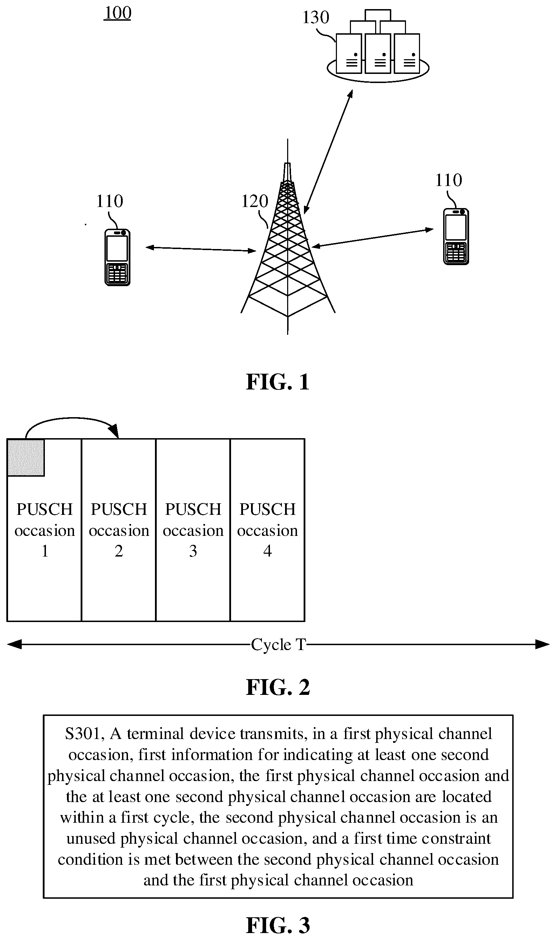

FIG. 1 illustrates a schematic diagram of an application scenario according to embodiments of the disclosure.

As illustrated in FIG. 1, a communication system 100 may include a terminal device 110 and a network device 120. The network device 120 may communicate with the terminal device 110 through an air interface. Multi-service transmission is supported between the terminal device 110 and the network device 120.

It is to be understood that the communication system 100 is provided here to describe the embodiments of the disclosure in an exemplary way, but the embodiments of the disclosure are not limited thereto. That is to say, the technical solutions of the embodiments of the disclosure may be implemented by various communication systems, for example a long term evolution (LTE) system, an LTE time division duplex (TDD) system, a universal mobile telecommunication system (UMTS), an Internet of Things (IoT) system, a narrow band Internet of Things (NB-IoT) system, an enhanced machine-type communications (eMTC) system, a 5th-generation communication system (or referred to as new radio (NR) communication system), or a future communication system.

In the communication system 100 as illustrated in FIG. 1, the network device 120 may be an access network device communicating with the terminal device 110. The access network device can provide communication coverage for a specific geographical area, and can communicate with the terminal device 110 (e.g., user equipment (UE)) within the coverage.

The network device 120 may be an evolutional Node B (eNB or eNodeB) in an LTE system, or a next generation radio access network (NG RAN) device, or a gNB in an NR system, or a radio controller in a cloud radio access network (CRAN). Alternatively, the network device 120 may be a relay station, an access point, a vehicle-mounted device, a wearable device, a hub, a switch, a network bridge, a router, a network device in a future evolved public land mobile network (PLMN) or the like.

The terminal device 110 may be any terminal device, including but not limited to a terminal device in wired or wireless connection with the network device 120 or another terminal device.

For example, the terminal device 110 may refer to an access terminal, user equipment (UE), a subscriber unit, a subscriber station, a mobile station, a remote station, a remote terminal, a mobile device, a user terminal, a terminal, a wireless communication device, a subscriber agent or a user device. The access terminal may be a cellular phone, a cordless phone, a session initiation protocol (SIP) phone, an IoT device, a satellite hand-held terminal, a wireless local loop (WLL) station, a personal digital assistant (PDA), a hand-held device with a wireless communication function, a computing device or another processing device connected to a radio modem, a vehicle-mounted device, a wearable device, a terminal device in a 5G network, a terminal device in a future evolved network or the like.

The terminal device 100 may be used in device to device (D2D) communication.

The wireless communication system 100 may further include a core network device 130 in communication with a base station. The core network device 130 may be a 5G core (5GC) device, for example an access and mobility management function (AMF), or for another example an authentication server function (AUSF), or for another example a user plane function (UPF), or for another example a session management function (SMF). Optionally, the core network device 130 may also be an evolved packet core (EPC) device in an LTE network, for example a session management function+core packet gateway (SMF+PGW-C) device. It is to be understood that the SMF+PGW-C can realize the functions of both an SMF and a PGW-C. During the network evolution, the core network device may also have other names, or the functions of a core network may be divided to form new network entities, which are not limited in the embodiments of the disclosure.

Various functional units of the communication system 100 may establish a connection with one another through a next generation (NG) interface to realize communication.

For example, the terminal device establishes an air interface connection with an access network device through a Uu interface, so as to transmit user plane data and a control plane signaling. The terminal device may establish a control plane signaling connection with the AMF through an NG interface 1 (N1 for short). The access network device for example a gNB may establish a user plane data connection with the UPF through an NG interface 3 (N3 for short). The access network device may establish a control plane signaling connection with the AMF through an NG interface 2 (N2 for short). The UPF may establish a control plane signaling connection with the SMF through an NG interface 4 (N4 for short). The UPF may interact user plane data with a data network through a NG interface 6 (N6 for short). The AMF may establish a control plane signaling connection with the SMF through an NG interface 11 (N11 for short). The SMF may establish a control plane signaling connection through an NG interface 7 (N7 for short).

FIG. 1 exemplarily illustrates a base station, a core network device and two terminal devices. Optionally, the wireless communication system 100 may include multiple base stations, and there may be another number of terminal devices within the coverage of each base station, which is not limited in the embodiments of the disclosure.

It is to be noted that FIG. 1 merely illustrates a system to which the disclosure is applicable in an exemplary way. Of course, the methods illustrated in the embodiments of the disclosure may also be applicable to other systems. In additional, the terms "system" and "network" herein are often exchangeable. The term "and/or" herein merely describes an association relationship between associated objects, representing that three relations may exist. For example A and/or B may represent following three cases: existence of A alone, existence of both A and B, and existence of B alone. Additionally, the character "/" generally indicates that the contextual objects are in an "or" relationship. It is also to be understood that the term "indicate" in the embodiments of the disclosure may refer to direct indication or indirect indication, or may refer to that there is an association relationship. By way of example, "A indicates B" may refer to that A directly indicates B, for example B may be acquired through A. "A indicates B" may also refer to that A indirectly indicates B, for example, A indicates C and B may be acquired through C. "A indicates B" may also refer to that there is an association relationship between A and B. It is to be also understood that the term "correspond" in the embodiments of the disclosure may mean that there is a direct correspondence or indirect correspondence between two objects, or may mean that there is an association relationship between the two object, or may mean a relationship that one object indicates or is indicated by another object or a relationship that one object configures or is configured by another object. It also to be understood that the term "predefine" or "predefined rule" mentioned in the embodiments of the disclosure may be realized by codes or tables prestored in a device (for example, a terminal device and a network device) or in other manners that can be used to indicate relevant information. The particular implementation is not limited in the disclosure. For example, the term "predefined" may refer to being defined in a protocol. It is also to be understood that, in the embodiments of the disclosure, the "protocol" may refer to specification protocols in the field of communications, for example LTE protocols, NR protocols or relevant protocols applied in future communication systems, which is not limited in the embodiments of the disclosure.

For convenience in understanding the technical solutions of the embodiments of the disclosure, relevant technologies of the embodiments of the disclosure are described hereinafter. Any combination formed by the relevant technologies below as optional solutions and the technical solutions of the embodiments of the disclosure shall fall within the scope of protection of the embodiments of the disclosure.

### Configured grant (CG) Physical Uplink Shared Channel (PUSCH)

NR uplink supports periodic transmission of a semi-persisent PUSCH, namely configured grant (CG) PUSCH transmission. CG includes two types:

Type-1 CG: transmission parameters, after being configured through Radio Resource Control (RRC), take effect without being activated by Downlink Control Information (DCI).

Type 2 CG: transmission parameters, after being configured through RRC, take effect after being activated by DCI.

CG supports a symbol-level cycle of 2 symbols/7 symbols, and a slot-level cycle of (1, 2, 4, 5, 8, 10, 16, 20, 32, 40...) slots. PUSCH transmission is performed once (namely, there is only one PUSCH occasion) in a CG cycle.

### Configured grant-Uplink Control Information (CG-UCI)

CG-GUI is introduced in NR in order to support transmission of a CG PUSCH in an unlicensed frequency band. Namely, UE embeds CG-UCI into a transmitted CG PUSCH to inform a base station of following parameters: a hybrid automatic repeat request (HARQ) process identifier, a redundancy version (RV), a new data indicator (NDI), and a channel occupancy time (COT) sharing indication. The HARQ process identifier, the RV, and the NDI are used to respectively indicate an HARQ process number, redundancy version information, and NDI information corresponding to a current CG PUSCH, and the COT sharing indication indicates whether a subsequent resource of COT where the current CG PUSCH is located can be shared for downlink transmission.

### Augmented Reality (AR)/virtual reality (VR), namely XR

Services studied in the extended reality (XR) and cloud game (CG) evaluations project in NR include AR/VR, CG, that is, XR/CG, etc. It can be seen that the service of XR/CG is a video stream service, which may reach a rate (measured by frame per second (fps)) of 30fps, 60fps, 90fps, and 120fps, and the period of the corresponding video stream is {33.33 ms, 16.67 ms, 11.11 ms, 8.33 ms}.

The characteristics of XR data include that a packet size is variable and has a large average value. Taking AR/VR with a data rate of 100Mbps as an example, uplink packets thereof have an average size of 20833 bytes, a maximum size of 31250 bytes, and a minimum size of 10417 bytes. That is, the size of packets to be transmitted in each cycle is between [10417 bytes, 31250 bytes]. In an actual system with a 100M bandwidth, it is needed to occupy transmission resources in about 4 time slots to transmit a packet having 20833 bytes.

In related art, it is supported to configure multiple continuous time-domain PUSCH occasions in one CG cycle for transmitting large XR packets. When the amount of data in a certain CG cycle is relatively small and there is no need to occupy all the pre-configured PUSCH occasions, UE may dynamically inform a base station of an unused PUSCH occasion in a current CG cycle. The base station may reallocate unused PUSCH occasions to other UE for data transmission, so as to improve system efficiency.

UE may transmit information to a base station to inform an unused PUSCH occasion in a CG cycle. Since a certain processing delay may be caused by the base station for demodulating the information and rescheduling data, it is meaningless to transmit some of the information.

Taking FIG. 2 as an example, four continuous time-domain PUSCH occasions are configured in one CG cycle. In PUSCH occasion 1, UE sends information indicating that PUSCH occasion 2 is unused, and a base station receives the information in the PUSCH occasion 1, but has no time to reschedule the PUSCH occasion 2 after completing data demodulation, decoding and the like. Apparently, such notification is meaningless.

For convenience of understanding the technical solution in the embodiments of the disclosure, the technical solution of the disclosure will be described in detail via particular embodiments. Any combination formed by the above relevant technologies as optional solutions and the technical solutions of the embodiments of the disclosure shall fall within the scope of protection of the embodiments of the disclosure. The embodiments of the disclosure include at least part of the following content.

Embodiments of the disclosure provide a method for indicating a transmission resource, implemented by a terminal device. As illustrated in FIG. 3, the method includes a following operation.

At S301, a terminal device transmits, in a first physical channel occasion, first information which is for indicating at least one second physical channel occasion. The first physical channel occasion and the at least one second physical channel occasion are located within a first cycle. The second physical channel occasion is an unused physical channel occasion. A first time constraint condition is met between the second physical channel occasion and the first physical channel occasion.

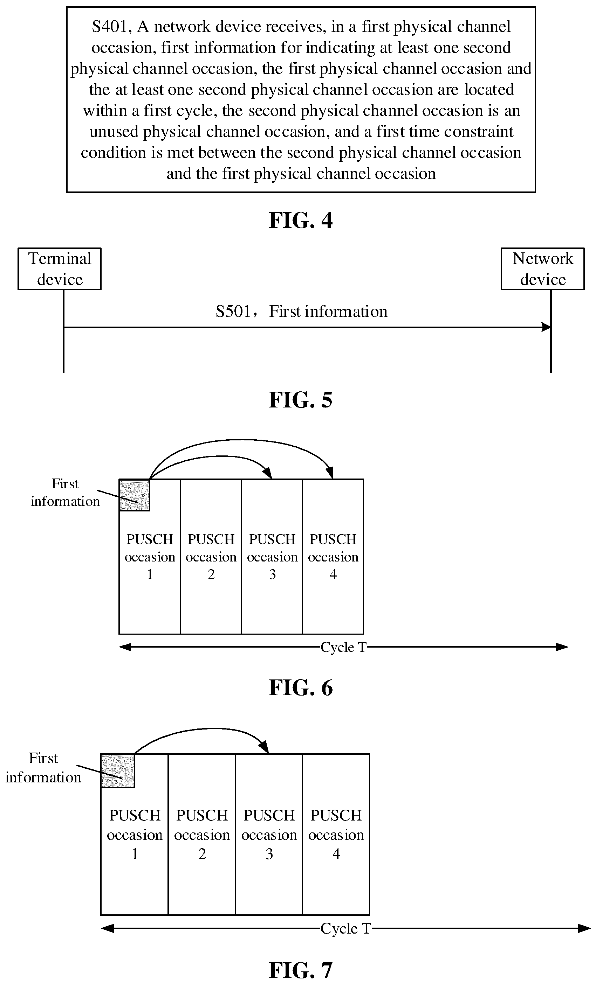

Embodiments of the disclosure provide a method for indicating a transmission resource, implemented by a network device. As illustrated in FIG. 4, the method includes a following operation.

At S401, a network device receives, in a first physical channel occasion, first information which is for indicating at least one second physical channel occasion. The first physical channel occasion and the at least one second physical channel occasion are located within a first cycle. The second physical channel occasion is an unused physical channel occasion. A first time constraint condition is met between the second physical channel occasion and the first physical channel occasion.

Embodiments of the disclosure provide a method for indicating a transmission resource, implemented by a communication system including a terminal device and a network device. As illustrated in FIG. 5, the method includes a following operation.

At S501, the terminal device transmits first information to the network device.

The terminal device transmits the first information to the network device in a first physical channel occasion, and the network device receives the first information in the first physical channel occasion. The first information indicates at least one second physical channel occasion. The first physical channel occasion and the at least one second physical channel occasion are located within a first cycle. The second physical channel occasion is an unused physical channel occasion. A first time constraint condition is met between the second physical channel occasion and the first physical channel occasion.

Hereinafter, the methods for indicating a transmission resource in any of FIG. 3 to FIG. 5 according to the embodiments of the disclosure are further described.

The terminal device may be configured with at least two physical channel occasions included in the first cycle , and the at least two physical channel occasions included in the first cycle configured for the terminal device may or may not be continuous. The first cycle may be understood as a CG cycle configured for the terminal, and the physical channel occasions in the first cycle may include uplink physical channel occasions such as a physical uplink control channel (PUCCH) occasion or a physical uplink shared channel (PUSCH) occasion. A physical channel occasion may be understood as a transmission resource, that is, different physical channel occasions occupy different time-domain resources.

The terminal device may transmit the first information in the first physical channel occasion, namely the first physical channel occasion is a physical channel occasion occupied by the first information in the first cycle. The first information is for indicating at least one second physical channel occasion, and the second physical channel occasion is an unused physical channel occasion in the first cycle. It is understandable that "unused" may be understood as not used by the terminal device, and may be replaced with other expressions such as "not transmitted", "invalid", "dropped", "skipped", "canceled", and "released".

The second physical channel occasion indicated by the first information and the first physical channel occasion satisfy the first time constraint condition. It is understandable that the terminal device determines, from the at least one unused second physical channel occasion within the first cycle, a physical channel occasion(s) satisfying the first time constraint condition with the first physical channel occasion, generates the first information based on the determined physical channel occasion(s), and transmits the first information to the network device in the first physical channel occasion. The network device receives the first information in the first physical channel occasion, and determines, based on the first information, the unused second physical channel occasion(s) in the first cycle which satisfies(y) the first time constraint condition with the first physical channel occasion.

In an example, configured PUSCH occasions are as illustrated in FIG. 2, four continuous time-domain PUSCH occasions are configured in a cycle T. The first physical channel occasion is PUSCH occasion 1, unused PUSCH occasions include PUSCH occasion 2, PUSCH occasion 3 and PUSCH occasion 4. The PUSCH occasion 3 and the PUSCH occasion 4 satisfy the first time constraint condition with the PUSCH occasion 1. As illustrated in FIG. 6, the terminal device transmits the first information in the PUSCH occasion 1, and the first information indicates that the PUSCH occasion 3 and the PUSCH occasion 4 are unused.

In an example, configured PUSCH occasions are as illustrated in FIG. 2, four continuous time-domain PUSCH occasions are configured in a cycle T. The first physical channel occasion is PUSCH occasion 1, unused PUSCH occasions include PUSCH occasion 2 and PUSCH occasion 3. The PUSCH occasion 3 and the PUSCH occasion 4 satisfy the first time constraint condition with the PUSCH occasion 1. As illustrated in FIG. 7, the terminal device transmits the first information in the PUSCH occasion 1, and the first information indicates that the PUSCH occasion 3 is unused.

In the embodiments of the disclosure, the first time constraint condition is related to a first duration. The first duration is a duration threshold which is set based on a time unit, and the time unit may include such as a time-domain symbol, a time slot, a subframe, and a millisecond for determining the duration.

In the embodiments of the disclosure, for a physical channel occasion in the first cycle that satisfies the first time constraint condition but is used, the first information may further indicate that this physical channel occasion is used, or may not indicate this physical channel occasion.

In an example, for the PUSCH occasion 4 in FIG. 7, the first information may indicate that the PUSCH occasion 4 is not used, or may not indicate whether the PUSCH occasion 4 is used.

In the method for indicating a transmission resource according to the embodiments of the disclosure, a terminal device transmits first information to a network device in a first physical channel occasion in a first cycle. The first information indicates an unused second physical channel occasion within the first cycle, and the second physical channel occasion satisfies a first time constraint condition with the first physical channel occasion, This allows the terminal device to notify the network device of the unused physical channel opportunity using a physical channel opportunity that has a time constraint relationship with the unused physical channel opportunity. In this way, the position of the reported unused physical channel occasion is limited based on the physical channel occasion where the first information is located, thereby avoiding invalid reporting by the terminal device that exceeds the processing capability of the network device, and improving the system efficiency.

In some embodiments, the first time constraint condition may include: a time interval between a first position of the first physical channel occasion and a second position of the second physical channel occasion is greater than or equal to the first duration; or the second position of the second physical channel occasion is no earlier than a third position subsequent to the first position of the first physical channel occasion. A time interval between the first position of the first physical channel occasion and the third position is equal to the first duration.

In some embodiments, the first position may at least include one of: an end position of the first physical channel occasion; an end position of a time-domain symbol occupied by the first information; and an end position of the first physical channel occasion.

In some embodiments, the second position may at least include one of: a start position of the second physical channel occasion; and a start position of a time slot in which the second physical channel occasion is located.

In the embodiments of the disclosure, the first position and the second position may be combined based on different positions.

In an example, a time interval between the end position of the first physical channel occasion and the start position of the second physical channel occasion is greater than or equal to the first duration; or the start position of the second physical channel occasion is no earlier than the third position subsequent to the end position of the first physical channel occasion. A time interval between the third position and the end position of the first physical channel occasion is equal to the first duration.

In an example, a time interval between the start position of the first physical channel occasion and the start position of the second physical channel occasion is greater than or equal to the first duration; or the start position of the second physical channel occasion is no earlier than the third position subsequent to the start position of the first physical channel occasion. A time interval between the third position and the start position of the first physical channel occasion is equal to the first duration.

In an example, a time interval between the end position of the time-domain symbol occupied by the first information in the first physical channel occasion and the end position of the second physical channel occasion is greater than or equal to the first duration; or the end position of the second physical channel occasion is no earlier than the third position subsequent to the start position of the time-domain symbol occupied by the first information in the first physical channel occasion. A time interval between the third position and the start position of the time-domain symbol occupied by the first information in the first physical channel occasion is equal to the first duration.

In some embodiments, the first duration may include a first number of time-domain symbols or time slots.

The first number may be denoted as X, i.e. the first duration includes X time-domain symbols or time slots.

In some embodiments, the first duration may be configured by a higher-layer signaling or agreed in a protocol.

The first duration being configured by a higher-layer signaling may be understood as that the first duration is configured for the terminal device by the network device through the higher-layer signaling.

The first duration being agreed in a protocol may be understood as that the length of the first duration is specified in the protocol.

For the first duration including X time-domain symbols or time slots, it may be understood that the value of X is configured by the higher-layer signaling or agreed in the protocol, and/or the time unit of the first duration being a time-domain symbol or time slot is configured by higher-layer signaling or agreed in the protocol.

In the method for indicating a transmission resource according to the embodiments of the disclosure, an unused physical channel occasion namely a second physical channel occasion in a first cycle may be indicated through a bitmap or by indicating a physical channel occasion namely a third physical channel occasion, and the time interval between the indicated second physical channel occasion and the first physical channel occasion where the first information is located is greater than the first duration. In this way, the time needed for the network to parse the first information and reschedule the transmission resource is fully considered, so that the network device can reallocate the second physical channel occasion(s) reported by the terminal device, and allocate the same to other terminal devices for use, thereby improving the utilization rate of transmission resources, while avoiding invalid reporting by the terminal device that exceeds the processing capability of the network device, and improving the system efficiency.

In some embodiments, the first duration may be related to a subcarrier spacing.

The first duration being related to a subcarrier spacing may be understood that the first duration is defined based on the subcarrier spacing, and different subcarrier spacings correspond to different lengths of the first duration. The value of the first duration is related to the size of the corresponding subcarrier spacing. For example, the subcarrier spacing is larger, the value of the first duration is larger.

In an exemplary implementation, different subcarrier spacings have mapping relationships with different values of the first duration, and the mapping relationships are agreed in a protocol or configured by the network device.

In an example, the following mapping relationships are included. Mapping relationship 1: the subcarrier spacing is 15 KHz, and the length of the first duration is A; Mapping relationship 2: the subcarrier spacing is 30 kHz, and the length of the first duration is B; Mapping relationship 3: the subcarrier spacing is 60 kHz, and the length of the first duration is C. When the current subcarrier spacing of the terminal device is 30 kHz, the length of the first duration is B.

In the method for indicating a transmission resource according to the embodiments of the disclosure, the minimum value of the time interval between the second physical channel occasion and the first physical channel occasion where the first information is located, that is, the first duration, may be related to the subcarrier spacing, so that the first duration is reasonably set sufficiently based on the subcarrier spacing of the terminal. The time needed for the network device to parse the first information and reschedule the transmission resource may be determined in combination with the subcarrier situation of the terminal device, and the second physical channel occasion to be reported can be accurately determined.

In an exemplary implementation, the length of the first duration may be calculated based on the subcarrier spacing of a current carrier of the terminal device. The algorithm used to calculate the length of the first duration based on the subcarrier spacing may be configured by the network device or agreed in a protocol.

In the embodiments of the disclosure, a transmission manner of the first information may at least include one of followings:

Transmission manner I: the first information is irrelevant with transmission of CG-UCI.

Transmission manner II: the first information is transmitted within the CG-UCI.

In the transmission manner I, transmission of the first information is not associated with transmission of CG-UCI, and there is no relevance between whether the terminal device is configured with CG-GUI and whether the terminal device is to transmit the first information. In an example, the terminal device is configured with CG-UCI. In an example, the terminal device is configured with no CG-UCI.

In some embodiments, in the transmission manner I, the first information may be same as configured grant-uplink control information (CG-UCI) in at least one of followings: a coding mode, a rate matching mode, and a resource mapping mode. It may be understood that the first information is not the CG-UCI, but is processed in the same mechanism as the CG-UCI.

In the transmission manner II, the operation S301 that terminal device transmits the first information in the first physical channel occasion may include that: the terminal device transmits first configured grant-uplink control information (CG-UCI) in the first physical channel occasion. The first CG-UCI may include the first information.

In this case, the operation S401 that the network device receives the first information in the first physical channel occasion may include that: the network device receives first configured grant-uplink control information (CG-UCI) in the first physical channel occasion. The first CG-UCI may include the first information.

The first information being transmitted within the first CG-UCI may be understood as that the first CG-UCI is CG-UCI which includes the first information.

The first information may be transmitted within the first CG-UCI, and the manner for the first CG-UCI to include the first information may at least include one of followings:

Inclusion manner I: the first CG-UCI includes a first information field for carrying the first information.

Inclusion manner II: the first CG-UCI includes a second information field for carrying second information or the first information.

In the inclusion manner I, a new information field namely the first information field is added to the first CG-UCI. The newly added information field carries the first information.

It is understandable that the first information field is specifically used for carrying the first information.

In the inclusion manner II: an existing information field, namely the second information field, in the first CG-UCI is reused (multiplexed) to carry the first information.

The second information field may include at least one of following information fields: a hybrid automatic repeat request (HARQ) process number, a redundancy version (RV), a new data indicator (NDI), and channel occupancy time (COT) sharing information. In this case, the second information includes at least one of followings: an HARQ process number, a redundancy version (RV), a new data indicator (NDI), and channel occupancy time (COT) sharing information.

The second information field may be an HARQ process number information field, and an HARQ process number in the HARQ process number information field may be reused for the first information.

It may be understood that when the second information field indicates the second information, the second information field does not indicate the first information; and when the second information field indicates the first information, the second information field does not indicate the second information.

The first CG-UCI may include a second information field.

In a case that the first CG-UCI is scrambled using a first radio network temporary identifier (RNTI), the first information field may carry the first information; and in a case that the first CG-UCI is scrambled using a second RNTI, the first information field may carry second information.

In a case that a third information field of the first CG-UCI indicates a first value, the second information field may carry the first information; and in a case that the third information field indicates a second value, the second information field may carry the second information.

In a case that the first CG-UCI corresponds to a first time-domain position, the second information field may carry the first information; and in a case that the first CG-UCI corresponds to a second time-domain position, the second information field may carry the second information.

The manner to determine whether the second information field in the first CG-UCI is used for carrying the second information or the first information may include at least one of followings:
Determination manner I: based on the RNTI used in scrambling the first CG-UCI;
Determination manner II: based on the value of the third information field included in the first CG-UCI; and
Determination manner III: based on the time-domain position of the first CG-UCI.

Through at least one of the above determination manners I to III, the terminal device or the network device may determine whether the second information field in the first CG-UCI includes the second information or the first information.

In the determination manner I: whether the second information field in the first CG-UCI includes the second information or the first information is indicated based on the RNTI used in scrambling the first CG-UCI. In the case that the first CG-UCI is scrambled using the first RNTI, it is determined that the second information field includes the first information. That is to say, the second information field is multiplexed to include the first information. In the case that the first CG-UCI is scrambled using the second RNTI, it is determined that the second information field includes the second information. That is to say, the second information field does not include the first information.

In the determination manner II: whether the second information field in the first CG-UCI includes the second information or the first information is indicated based on the third information field carried in the first CG-UCI. The third information field may be an information field newly added to the first CG-UCI, or may be an existing information field in the first CG-UCI.

In an example, in the case that the third information field has a first value, the second information field includes the first information. That is to say, the second information field is multiplexed to include the first information. In the case that the third information field has a second value, the second information field includes the second information. That is to say, the second information field does not include the first information.

The first value and the second value are different values. The first value may be a value configured by the network device or a value agreed in a protocol, and the specific value is not limited.

In some embodiments, the second value may be any value different from the first value.

In the determination manner III, the first time-domain position corresponding to the first CG-UCI may be understood as that the first CG-UCI is transmitted at the first time-domain position, and the second time-domain position corresponding to the first CG-UCI may be understood as that the first CG-UCI is transmitted at the second time-domain position. Whether the second information field in the first CG-UCI includes the second information or the first information may be indicated based on the time-domain position where the first CG-UCI is transmitted. It is understandable that the first CG-UCI including the first information is transmitted at the first time-domain position. In the case that the first CG-UCI is transmitted at the first time-domain position, the second information field includes the first information; that is, the second information field is multiplexed to indicate the first information. In the case that the first CG-UCI is transmitted at the second time-domain position, the second information field includes the second information; that is, the second information field does not indicate the first information. In an example, the second time-domain position may be a time-domain position other than the first time-domain position.

The first time-domain position is a designated time-domain position; and in one example, the first time-domain position is a designated physical channel occasion.

In some embodiments, the first information may indicate the at least one second physical channel occasion in at least one of following manners:

Indication manner A1: the first information indicates the at least one second physical channel occasion through a bitmap. A bit in the bitmap indicates whether a corresponding physical channel occasion is a second physical channel occasion.

Indication manner A2: the first information indicates a third physical channel occasion, and the at least one second physical channel occasion includes the third physical channel occasion and a physical channel occasion(s) subsequent to the third physical channel occasion within the first cycle.

In the embodiments of the disclosure, whether the first information indicates the at least one second physical channel occasion in the indication manner A1 or the indication manner A2 may be determined based on third information. The third information may include at least one of followings: first configuration information configured by a network device, with the first configuration information indicating the manner in which the first information indicates the at least one second physical channel occasion; the number of second physical channel occasions included in the at least one second physical channel occasion; and the number of physical channel occasions included in the first cycle.

The third information may include the first configuration information configured by the network device, and the terminal may receive the first configuration information configured by the network device, and determine, based on the first configuration information, to indicate the first information in the indication manner A1 or the indication manner A2.

The third information may include the number N of second physical channel occasions included in the at least one second physical channel occasion, and the terminal device may determine, based on the value of N, to indicate the first information in the indication manner A1 or the indication manner A2. In an example, the first information is indicated in the indication manner A1 when N is smaller than or equal to a first threshold, and the first information is indicated in the indication manner A2 when N is greater than the first threshold. The first threshold may be a positive integer such as 4 or 6.

The third information may include the number M of physical channel occasions included in the first cycle, and the terminal device may determine, based on the value of M, to indicate the first information in the indication manner A1 or the indication manner A2. In an example, the first information is indicated in the indication manner A1 when M is smaller than or equal to a second threshold, and the first information is indicated in the indication manner A2 when M is greater than the second threshold. The second threshold may be a positive integer such as 4, 6 or 8. The first threshold may be same as or different from the second threshold.

For the indication manner A1, different bits in the first information are used to indicate whether corresponding physical channel occasions are second physical channel occasions.

The at least one second physical channel occasion is part or all of the physical channel occasions corresponding to the first information.

It is understandable that, each bit indicates whether a corresponding physical channel occasion is a second physical channel occasion or not based on different values.

In an example, a bit having a value of 1 indicates that a corresponding physical channel occasion is a second physical channel occasion, and a bit having a value of 0 indicates that a corresponding physical channel occasion is not a second physical channel occasion. In this case, a bitmap including 0011 indicates physical channel occasions corresponding to the first to fourth bits as being respectively: not a second physical channel occasion, not a second physical channel occasion, a second physical channel occasion and a second physical channel occasion respectively. In this case, the second physical channel occasions indicated by the first information include the physical channel occasion corresponding to the third bit and the physical channel occasion corresponding to the fourth bit.

In some embodiments, the first information may indicate the at least one second physical channel occasion through the bitmap, wherein the first information includes a second number of bits. The second number may be determined in at least one of following manners:
Determination manner A1: being configured by a network device;
Determination manner A2: being agreed between the terminal device and the network device; and
Determination manner A3: being determined according to a fourth physical channel occasion within the first cycle.

In the embodiments of the disclosure, when the first physical channel occasion refers to different physical channel occasions in the first cycle, the second number may be the same or different. It is understandable that when the second number is related to the position of the first physical channel occasion, the second number is different when the first physical channel occasion is different physical channel occasions in the first cycle.

In some embodiments, the fourth physical channel occasion may include at least one of: a starting physical channel occasion within the first cycle; the first physical channel occasion; an earliest physical channel occasion among physical channel occasions within the first cycle that have a time interval greater than or equal to a first duration from the first physical channel occasion; and a latest physical channel occasion within the first cycle.

The starting physical channel occasion within the first cycle may be understood as the earliest physical channel occasion within the first cycle, for example a physical channel occasion allocated with foremost transmission time.

The earliest physical channel occasion among the physical channel occasions within the first cycle that have the time interval greater than or equal to the first duration from the first physical channel occasion is a physical channel occasion allocated with foremost transmission time among the physical channel occasions having the time interval greater than or equal to the first duration from the first physical channel occasion.

The latest physical channel occasion within the first cycle may be understood as a last physical channel occasion within the first cycle, for example a physical channel occasion allocated with latest transmission time.

With the second number being determined according to the fourth physical channel occasion within the first cycle as an example, in an implementation, the second number is the number of physical channel occasions included in the first cycle starting from the fourth physical channel occasion.

In an example, the fourth physical channel occasion is the starting physical channel occasion in the first cycle, and the second number is the number M of physical channel occasions included in the first cycle. In this case, the first physical channel occasion refers to different physical channel occasions in the first cycle, and the second number is the same.

In an example, the fourth physical channel occasion is the first physical channel occasion, and the second number is the number of physical channel occasions included in the first cycle starting from the first physical channel occasion. In this case, the first physical channel occasion refers to different physical channel occasions in the first cycle, and the second number is different.

In an example, the fourth physical channel occasion is the earliest physical channel occasion among the physical channel occasions within the first cycle that have the time interval greater than or equal to the first duration from the first physical channel occasion, and the second number is the number of physical channel occasions within the first cycle that have a time interval greater than or equal to the first duration from the first physical channel occasion. In this case, the first physical channel occasion refers to different physical channel occasions in the first cycle, and the second number is different.

With the second number being determined according to the fourth physical channel occasion within the first cycle as an example, in an implementation, the second number is the number of physical channel occasions included in the first cycle starting from a physical channel occasion distanced by a set offset from the fourth physical channel occasion. It is understandable that when the fourth physical channel occasions are different, the set offset may be different.

In an example, the fourth physical channel occasion is the starting physical channel occasion in the first cycle, and the second number is the number of physical channel occasions included in the first cycle starting from the physical channel occasion distanced by a set offset from the starting physical channel occasion. In this case, the first physical channel occasion refers to different physical channel occasions in the first cycle, and the second number is the same.

Exemplarily, 4 PUSCH occasions may be configured in one cycle: occasion 1 to occasion 4, and the set offset may be 1 occasion; in this case, the occasion 2 is distanced by 1 occasion from the occasion 1, and the second number is the number 3 of occasions starting from the occasion 2.

In an example, the fourth physical channel occasion is the first physical channel occasion, and the second number is the number of physical channel occasions included in the first cycle starting from the physical channel occasion distanced by a set offset from the first physical channel occasion, or the number of physical channel occasions included in the first cycle starting from the first physical channel occasion. In this case, the first physical channel occasion refers to different physical channel occasions in the first cycle, and the second number is different.

Exemplarily, 4 PUSCH occasions may be configured in one cycle: occasion 1 to occasion 4, and the set offset may be 1 occasion; in this case, the fourth physical channel occasion is the occasion 1, the occasion 2 is distanced by 1 occasion from the occasion 1, and the second number is the number 3 of occasions starting from the occasion 2.

In an example, the fourth physical channel occasion is the latest physical channel occasion namely the last physical channel occasion in the first cycle, and the second number is the number of physical channel occasions included in the first cycle starting from the physical channel occasion distanced by a set offset from the last physical channel occasion. In this case, the first physical channel occasion refers to different physical channel occasions in the first cycle, and the second number is the same.

Exemplarily, 4 PUSCH occasions may be configured in one cycle: occasion 1 to occasion 4, and the set offset may be 3 occasions; in this case, the fourth physical channel occasion is the occasion 4, the occasion 1 is distanced by 3 occasions from the occasion 4, and the second number is the number 4 of occasions starting from the occasion 1.

With the second number being determined according to the fourth physical channel occasion within the first cycle as an example, in an implementation, the second number is the number of physical channel occasions within the first cycle that have a time interval greater than or equal to a first duration from the fourth physical channel occasion; or the second number is the number of physical channel occasions starting from a fifth physical channel occasion in the first cycle. The fifth physical channel occasion is an earliest physical channel occasion among physical channel occasions within the first cycle that have a time interval greater than or equal to the first duration from the fourth physical channel occasion.

In an example, the fourth physical channel occasion is the starting physical channel occasion in the first cycle, and the second number is the number of physical channel occasions included in the first cycle having a time interval greater than or equal to the first duration from the starting physical channel occasion. In this case, the first physical channel occasion refers to different physical channel occasions in the first cycle, and the second number is the same.

Exemplarily, 4 PUSCH occasions may be configured in one cycle: occasion 1 to occasion 4, and physical channel occasions having a time interval greater than or equal to the first duration from the starting physical channel occasion namely the occasion 1 may include: occasion 2, occasion 3 and occasion 4, and the second number is 3.

In an example, the fourth physical channel occasion is the first physical channel occasion, and the second number is the number of physical channel occasions included in the first cycle having a time interval greater than or equal to the first duration from the first physical channel occasion. In this case, the first physical channel occasion refers to different physical channel occasions in the first cycle, and the second number is different.

Exemplarily, 4 PUSCH occasions may be configured in one cycle: occasion 1 to occasion 4, and the first physical channel occasion may be the occasion 2; in this case, physical channel occasions having a time interval greater than or equal to the first duration from the occasion 2 include the occasion 3 and the occasion 4, and the second number is 2.

In an example, the fourth physical channel occasion is the earliest physical channel occasion among the physical channel occasions within the first cycle that have the time interval greater than or equal to the first duration from the first physical channel occasion, and the second number is the number of physical channel occasions within the first cycle that have the time interval greater than or equal to the first duration from the first physical channel occasion. In this case, the first physical channel occasion refers to different physical channel occasions in the first cycle, and the second number is different.

In some embodiments, the first physical channel occasion may refer to different physical channel occasions in the first cycle and the second number may be the same, wherein the physical channel occasions respectively corresponding to bits in the first information are fixed or not fixed.

Exemplarily, 4 PUSCH occasions are configured in one cycle: occasion 1 to occasion 4, the second number is 3, and 3 bits are fixed to correspond to the occasion 2, occasion 3, and occasion 4 respectively.

Exemplarily, 4 PUSCH occasions are configured in one cycle: occasion 1 to occasion 4, and the second number is 3; when the first information needs to indicate whether the occasion 2, occasion 3 and occasion 4 are the second physical channel occasions, 3 bits correspond to the occasion 2, the occasion 3, and the occasion 4, respectively; and when the first information needs to indicate whether the occasion 3 and the occasion 4 are the second physical channel occasions, former 2 of the 3 bits correspond to the occasion 3 and the occasion 4 respectively.

The first information may be used to indicate the third physical channel occasion, wherein the first information indicates a first relationship between the third physical channel occasion and a sixth physical channel occasion.

For the indication manner A2, the first information is for indicating a physical channel occasion in the first cycle. This physical channel occasion is referred to as a third physical channel occasion, and the physical channel occasion(s) among the physical channel occasions starting from the third physical channel occasion in the first cycle is (are) a second physical channel occasion(s). That is, the at least one second physical channel occasion includes the physical channel occasions starting from the third physical channel occasion in the first cycle.

In an example, 4 PUSCH occasions are configured in one cycle: occasion 1 to occasion 4, and the first information indicates the occasion 2. In this case, the at least one second physical channel occasion includes the occasion 2, occasion 3 and occasion 4.

In an implementation, the manner in which the first information indicates the third physical channel occasion may include that the first information includes an index of the third physical channel occasion.

In an implementation, the first information may indicate a first relationship between the third physical channel occasion and a sixth physical channel occasion.

The sixth physical channel occasion may serve as a reference physical channel occasion, and the first relationship may be used to determine the third physical channel occasion based on the sixth physical channel occasion. The first relationship may be understood as a positional relationship between the third physical channel occasion and the sixth physical channel occasion. In an example, the first relationship includes an offset between the third physical channel occasion and the sixth physical channel occasion.

After determining the third physical channel occasion, the terminal device may generate the first information based on the first relationship between the third physical channel occasion and the sixth physical channel occasion. The network device may receive the first information and determine the third physical channel occasion based on the first relationship indicated by the first information and the sixth physical channel occasion.

The sixth physical channel occasion may be a physical channel occasion configured by the network device or may be a physical channel occasion negotiated in advance.

In some embodiments, the sixth physical channel occasion may include at least one of followings: a starting physical channel occasion within the first cycle; the first physical channel occasion; an earliest physical channel occasion among physical channel occasions within the first cycle that have a time interval greater than or equal to a first duration from the first physical channel occasion; and a latest physical channel occasion within the first cycle.

In some embodiments, the first relationship indicated by the first information may include at least one of a third number and a fourth number.

The third number is the number of physical channel occasions by which the third physical channel occasion is offset relative to the sixth physical channel occasion.

The fourth number is the number of time units by which a first time unit is offset relative to a second time unit. The third physical channel occasion is located in the first time unit. The sixth channel occasion is located in the second time unit.

The third number may be understood as a physical channel occasion offset. Third number being 0 may represent that the third physical channel occasion is the sixth physical channel occasion itself. The third number being 1 may represent that the third physical channel occasion is the first physical channel occasion subsequent to the sixth physical channel occasion. The third number being 2 may represent that the third physical channel occasion is the second earliest physical channel occasion subsequent to the sixth physical channel occasion.

It is understandable that the value of the third number may be smaller than 0. For example, the third number being -1 may represent that the third physical channel occasion is a physical channel occasion immediately earlier than the sixth physical channel occasion; the third number being -2 may represent that the third physical channel occasion is a physical channel occasion secondly earlier than the sixth physical channel occasion.

In some embodiments, the first information may indicate the fourth number and the first time unit may include at least two physical channel occasions, the third physical channel occasion being an earliest physical channel occasion in the first time unit.

The fourth number may be understood as an offset of a slot where a physical channel occasion is located. The first time unit and the second time unit are time units in which the third physical channel occasion and the sixth physical channel occasion are located respectively. A time unit in which a physical channel occasion is located may be a slot, a subframe, a frame, a millisecond, or the like.

With the time unit being a time slot as an example, the fourth number being 0 may represent that the third physical channel occasion is located in the same time slot as the sixth physical channel occasion, which is the time slot A in which the sixth channel occasion is located; and the fourth number being 1 may represent that the time slot in which the third physical channel occasion is located is the time slot A+1 immediately after the time slot in which the sixth physical channel occasion is located.

In some embodiments, the first information may indicate the fourth number and the first time unit may include at least two physical channel occasions, the third physical channel occasion being an earliest physical channel occasion in the first time unit.

A time unit may include multiple physical channel occasions, and the earliest one of the multiple physical channel occasions in the first time unit may be the third physical channel occasions indicated by the first information.

In some embodiments, at least one physical channel occasion included in the first time unit may include a physical channel occasion earlier than a physical channel occasion having a time interval equal to the first duration from the first physical channel occasion, wherein the physical channel occasion having the time interval equal to the first duration from the first physical channel occasion is the third physical channel occasions indicated by the first information.

In some embodiments, the first information may include a fifth number of bits, and the fifth number may be determined in at least one of following manners:
being configured by a network device;
being agreed between the terminal device and the network device;
being determined based on the third number;
being determined based on the fourth number; and
being determined according to a fourth physical channel occasion within the first cycle.

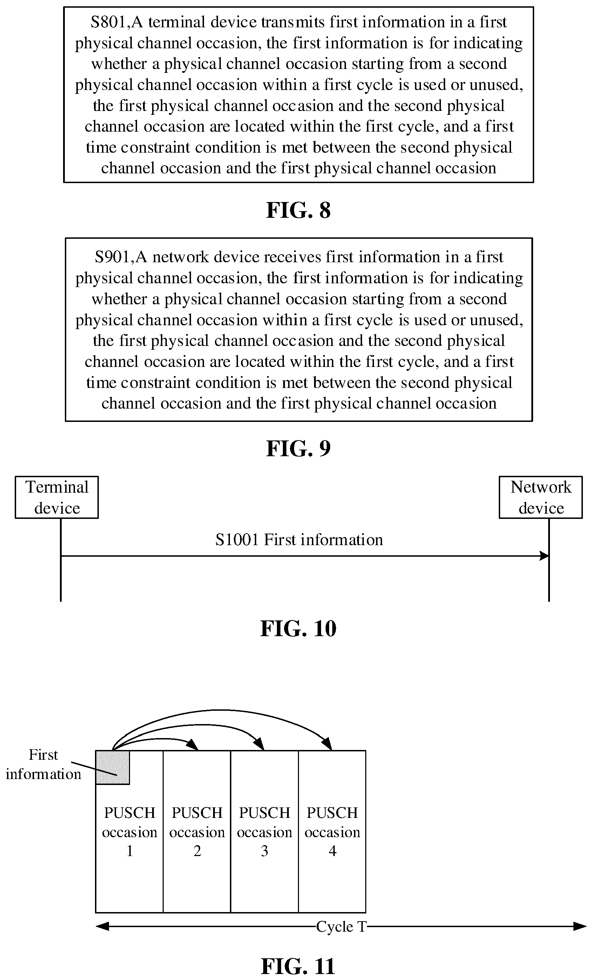

Embodiments of the disclosure further provide a method for indicating a transmission resource, implemented by a terminal device. As illustrated in FIG. 8, the method includes the following operation.

At S801, a terminal device transmits first information in a first physical channel occasion. The first information is for indicating whether a physical channel occasion starting from a second physical channel occasion within a first cycle is used or unused. The first physical channel occasion and the second physical channel occasion are located within the first cycle. A first time constraint condition is met between the second physical channel occasion and the first physical channel occasion.

Embodiments of the disclosure provide a method for indicating a transmission resource, implemented by a network device. As illustrated in FIG. 9, the method includes the following operation.

At S901, a network device receives first information in a first physical channel occasion. The first information is for indicating whether a physical channel occasion starting from a second physical channel occasion within a first cycle is used or unused. The first physical channel occasion and the second physical channel occasion are located within the first cycle. A first time constraint condition is met between the second physical channel occasion and the first physical channel occasion.

Embodiments of the disclosure provide a method for indicating a transmission resource, implemented by a communication system including a terminal device and a network device. As illustrated in FIG. 10, the method includes the following operation.

At S1001, the terminal device transmits first information to the network device.

The terminal device may transmit the first information to the network device in a first physical channel occasion. The network device may receive the first information from the terminal device in the first physical channel occasion. The first information is for indicating whether a physical channel occasion starting from a second physical channel occasion within a first cycle is used or unused. The first physical channel occasion and the second physical channel occasion are located within the first cycle. A first time constraint condition is met between the second physical channel occasion and the first physical channel occasion.

Hereinafter, the method for indicating a transmission resource in any of FIG. 8 to FIG. 10 according to the embodiments of the disclosure is further described.

The terminal device may be configured with at least two physical channel occasions included in the first cycle, and the at least two physical channel occasions included in the first cycle configured for the terminal device may or may not be continuous. The first cycle may be understood as a CG cycle configured for the terminal device, and the physical channel occasions in the first cycle may include uplink physical channel occasions such as a physical uplink control channel (PUCCH) occasion or a physical uplink shared channel (PUSCH) occasion. A physical channel occasion may be understood as a transmission resource, that is, different physical channel occasions occupy different time-domain resources.

The terminal device may transmit the first information in the first physical channel occasion, namely the first physical channel occasion is the physical channel occasion occupied by the first information in the first cycle. The first information is for indicating whether a physical channel occasion(s) starting from a second physical channel occasion within the first cycle is(are) used, or the first information is for indicating a physical channel occasion(s) starting from a second physical channel occasion within the first cycle as being used or unused. It is understandable that "unused" may be understood as not used by the terminal device, and may be replaced with other expressions such as "not transmitted", "invalid", "dropped", "skipped", "canceled", and "released".

The physical channel occasion(s) indicated by the first information is(are) a physical channel occasion(s) starting from a second physical channel, and there is a first time constraint condition between the second physical channel occasion and the first physical channel occasion.

A physical channel indicated by the first information may be whether each physical channel occasion among all or part of the physical channel occasion(s) starting from the second physical channel occasion in the first cycle is used.

In an example, configured PUSCH occasions are as illustrated in FIG. 2, four continuous time-domain PUSCH occasions are configured in a cycle T. The first physical channel occasion is PUSCH occasion 1, unused PUSCH occasions include PUSCH occasion 2, PUSCH occasion 3 and PUSCH occasion 4. The PUSCH occasion 2 satisfies the first time constraint condition with the PUSCH occasion 1. As illustrated in FIG. 11, the terminal device transmits the first information in the PUSCH occasion 1, and the first information indicates whether the PUSCH occasion 2, the PUSCH occasion 3 and the PUSCH occasion 4 are used.

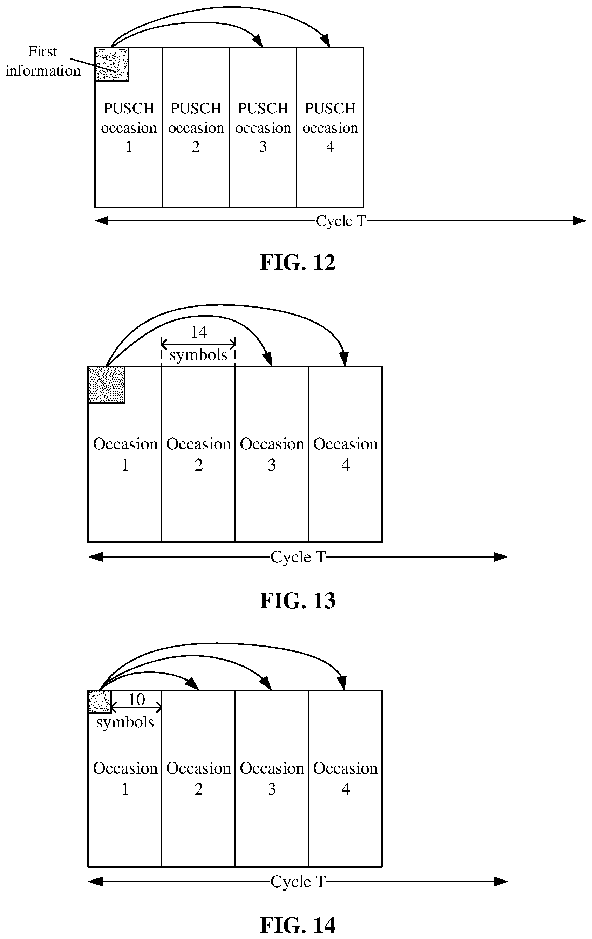

In an example, configured PUSCH occasions are as illustrated in FIG. 2, four continuous time-domain PUSCH occasions are configured in a cycle T. The first physical channel occasion is PUSCH occasion 1, unused PUSCH occasions include PUSCH occasion 2 and PUSCH occasion 3. The PUSCH occasion 3 satisfies the first time constraint condition with the PUSCH occasion 1. As illustrated in FIG. 12, the terminal device transmits the first information in the PUSCH occasion 1, and the first information indicates whether the PUSCH occasion 3 and the PUSCH occasion 4 are used.

In the embodiments of the disclosure, the first time constraint condition is related to a first duration. The first duration is a duration threshold which is set based on a time unit, and the time unit may include such as a time-domain symbol, a time slot, a subframe, and a millisecond for determining the duration.

In the method for indicating a transmission resource according to the embodiments of the disclosure, a terminal device transmits first information to a network device in a first physical channel occasion in a first cycle. The first information indicates whether a physical channel occasion(s) starting from a second physical channel occasion within the first cycle is used. In a case that the second physical channel occasion satisfies a first time constraint condition, and that a time interval between the physical channel occasion indicated by the first information as being used or not and the first physical channel occasion is greater than a time interval between the second physical channel occasion and the first physical channel occasion, a time relationship between the physical channel occasion indicated by the first information and the first physical channel occasion is limited by limiting the time of the second physical channel occasion. In this way, the position of the physical channel occasion indicated as being used or not is limited based on the physical channel occasion where the first information is located, thereby avoiding invalid reporting by the terminal device that exceeds the processing capability of the network device, and improving the system efficiency.

It is to be noted that, the terminal device may support one or both of the methods for indicating a transmission resource as illustrated in FIGS. 3, 4, and 5 and the method for indicating a transmission resource as illustrated in FIGS. 8, 9, and 10. It is understandable that the first information in the method for indicating a transmission resource as illustrated in FIGS. 3, 4, and 5 indicates content different from that indicated by the first information in the method for indicating a transmission resource as illustrated in FIGS. 8, 9, and 10, and the second physical occasion has different meanings in the two methods. In the method for indicating a transmission resource as illustrated in FIGS. 3, 4, and 5, the second physical channel occasion is an unused physical channel occasion that satisfies a first time constraint condition with a first physical channel occasion, and in the method for indicating a transmission resource as illustrated in FIGS. 3, 4, and 5, the second physical channel occasion is a physical channel occasion that satisfies a first time constraint condition with a first physical channel occasion; and the first time constraint condition in the two methods are different from each other.

In some embodiments, the first time constraint condition may include that: the second physical channel occasion is an earliest physical channel occasion among physical channel occasions within the first cycle that have a first position with a time interval relative to a second position of the first physical channel occasion being greater than or equal to a first duration; or the second physical channel occasion is an earliest physical channel occasion among physical channel occasions that have a first position not earlier than a third position after the first physical channel occasion, and a time interval between the third position and the second position of the first physical channel occasion is greater than or equal to the first duration.

In some embodiments, the first position may at least include one of: a start position of the second physical channel occasion; and a start position of a time slot in which the second physical channel occasion is located.

In some embodiments, the second position may at least include one of: an end position of the second physical channel occasion; an end position of a time-domain symbol occupied by the first information; and an end position of a time slot in which the second physical channel occasion is located.

The length and the configuration manner of the first duration in the method for indicating a transmission resource as illustrated in FIGS. 8, 9, and 10 may refer to the description of the length and the configuration manner of the first duration in the method for indicating a transmission resource as illustrated in FIGS. 5, 6, and 7, which will not be repeated. The transmission manner and inclusion manner of the first information in the method for indicating a transmission resource as illustrated in FIGS. 8, 9, and 10 may refer to the description of the transmission manner and inclusion manner of the first information in the method for indicating a transmission resource as illustrated in FIGS. 5, 6, and 7, which will not be repeated.

In some embodiments, the first information may indicate whether the physical channel occasion starting from the second physical channel occasion within the first cycle is used or unused in at least one of following manners:

Indication manner B1: the first information indicates, through a bitmap, whether the physical channel occasion starting from the second physical channel occasion within the first cycle is used or unused, a bit(s) in the bitmap indicating whether a corresponding physical channel occasion is used or unused; and

Indication manner B1: the first information indicates a third physical channel occasion, the first cycle including the third physical channel occasion, and a physical channel occasion subsequent to the third physical channel occasion within the first cycle being unused.

In the some embodiments of the disclosure, whether the indication manner in which the first information indicates whether the physical channel occasion starting from the second physical channel occasion within the first cycle is used or unused is the indication manner B1 or the indication manner B2 may be determined based on third information. The third information may include at least one of followings: first configuration information configured by a network device, with the first configuration information indicating a manner in which the first information indicates whether the physical channel occasion starting from the second physical channel occasion within the first cycle is used or unused; the number of physical channel occasions starting from the second physical channel occasion within the first cycle; and the number of physical channel occasions included in the first cycle.

When the third information includes the first configuration information configured by the network device, the terminal device may receive the first configuration information configured by the network device, and determine, based on the first configuration information, to indicate the first information in the indication manner B1 or the indication manner B2.

When the third information includes the number H of physical channel occasions starting from the second physical occasion within the first cycle, the terminal device may determine, based on the value of H, to indicate the first information in the indication manner B1 or the indication manner B2. In an example, the first information is indicated in the indication manner B1 when H is smaller than or equal to a third threshold, and the first information is indicated in the indication manner B2 when H is greater than the third threshold. The third threshold may be a positive integer such as 4 or 6.

When the third information includes the number M of physical channel occasions included in the first cycle, the terminal device may determine, based on the value of M, to indicate the first information in the indication manner B1 or the indication manner B2. In an example, the first information is indicated in the indication manner B1 when M is smaller than or equal to a fourth threshold, and the first information is indicated in the indication manner B2 when M is greater than the fourth threshold. The fourth threshold may be a positive integer such as 4, 6 or 8. The third threshold may be same as or different from the fourth threshold.

For the indication manner B1, different bits in the bitmap are used to indicate whether corresponding physical channel occasions are used. The physical channel occasion(s) corresponding to the first information is(are) all or part of the physical channel occasion(s) starting from the second physical channel occasion in the first cycle.

It is understandable that a bit may indicate whether a corresponding physical channel occasion is used or not based on different values of the bit.

In an example, a bit having a value of 1 indicates that a corresponding physical channel occasion is unused, and a bit having a value of 0 indicates that a corresponding physical channel occasion is used. In this way, a bitmap including 0011 may indicate that physical channel occasions corresponding to the first to fourth bits are: used, used, unused, unused

In some embodiments, the first information may indicate, through the bitmap, whether the physical channel occasion starting from the second physical channel occasion within the first cycle is used or unused, wherein the first information includes a second number of bits. The manner of determining the second number may refer to the determining manner of the second number as aforesaid, which will not be repeated.

For the indication manner B2, the first information indicates a physical channel occasion in the first cycle. The physical channel occasion is referred to as a third physical channel occasion, and the third physical channel occasion is a second physical channel occasion, or is after the second physical channel occasion.

In an example, 4 PUSCH occasions are configured in one cycle: occasion 1 to occasion 4; the first information may indicate the occasion 2, and whether PUSCH occasions in the occasion 2, the occasion 3 and the occasion 4 are used may be indicated.

The indication method of the third physical channel occasion in the embodiments of the disclosure may refer to the description of the indication method A2, and will not be described again.

Hereinafter, the method for indicating a transmission resource according to the embodiments of the disclosure is further explained.

### Scheme I: a time constraint satisfied by a useless PUSCH occasion.

A terminal may be configured with multiple physical channel occasions (resources) within a first time period (namely a cycle). The multiple physical channel occasions occupy different time-domain resources. The multiple physical channel occasions include a first physical channel occasion and a second physical channel occasion. The first physical channel occasion is prior to the second physical channel occasion, namely the end position of first physical channel occasion is prior to the start position of the second physical channel occasion.

The terminal may transmit first information in the first physical channel occasion. The first information is for indicating that the second physical channel occasion is unused. "Unused" may also be represented as "not transmitted", "not used" "invalid", "dropped", "skipped", "canceled", or "released".

The second physical channel occasion satisfies the following time constraint: a time interval between the start position of the second physical channel occasion and a first position of the first physical channel occasion is not smaller than a preset value namely a first duration, the preset value being configured for the terminal by a base station through a higher-layer signaling or being agreed in a protocol.

The preset value may be X time-domain symbols.

The preset value is related to a subcarrier spacing (used for a current cell or bandwidth part (BWP)); namely, different subcarrier spacings correspond to different values for the preset value. In an implementation, different subcarrier spacings have mapping relationships with different values for the preset value, and the mapping relationships may be agreed in a protocol or configured by a base station. For example, when the subcarrier spacing is larger, the value for the preset value is larger. In another implementation, the value for the preset value is calculated based on the subcarrier spacing of the current carrier.

It is understandable that the start position of the second physical channel occasion is no earlier than an X^{th} time-domain symbol after the first position of the first physical channel occasion, X is a positive integer, or X is configured for the terminal by a base station through a higher-layer signaling or is agreed in a protocol.

The first position of the first physical channel occasion is: the end position of the first physical channel occasion, or the end position of time-domain symbols occupied by the first information in the first physical channel occasion.

The first information is the same as CG-UCI in a coding mode, a rate matching mode, or a resource mapping mode.

Alternatively, the base station configures the CG-UCI to include the first information (namely a new information field parallel to an existing information field).

Alternatively, part of information in the CG-UCI, for example an HARQ process number, RV information, or NDI information, is reused for the first information. For example, 2-bit RV information is used as a bitmap in Embodiment 2 or indication of Table 1 or 2.

The CG-UCI of which part of information is reused to indicate the first information may be scrambled using a first RNTI, and the CG-UCI of which no part of information is reused to indicate the first information may be scrambled using a second RNTI. Alternatively, the CG-UCI may include a second information field that indicates whether part of information in the current CG-UCI is used to indicate the first information. For example, the second information field being set to 1 indicates that a portion of the information fields in the CG-UCI is used to indicate the first information; otherwise, the portion of the information fields in the CG-UCI is not used to indicate the first information. Alternatively, whether part of information in the current CG-UCI is used to indicate the first information may be determined based on a time-domain position where the CG-UCI is transmitted. For example, the CG-UCI of which part of information is reused to indicate the first information can be transmitted only in a specific physical channel occasion.

In an example, as illustrated in FIG. 13 or FIG. 14, UE is configured with 4 PUSCH occasions within a cycle, each PUSCH occasion occupies 14 time-domain symbols, and X = 10. Time-domain symbols occupied by the first information may be symbols 0 to 3 in the PUSCH occasion.

The first position may be the end position of the first physical channel occasion; as illustrated in FIG. 13, the second physical channel occasion is the occasion 3 or the occasion 4, but cannot be the occasion 2.

The first position may be the end position of time-domain symbols occupied by the first information in the first physical channel occasion; as illustrated in FIG. 14, the second physical channel occasion is the occasion 2, the occasion 3 or the occasion 4.

### Scheme II: indicating a range of a physical channel occasion(s)

A terminal may be configured with M physical channel occasions (or resources) within a first time period (namely a cycle), the M physical channel occasions occupying different time-domain resources.

The terminal may transmit first information in a first physical channel occasion. The first information is for indicating whether N physical channel occasions starting from a second physical channel occasion are usable. The M physical channel occasions include the first physical channel occasion and the second physical channel occasion. The third physical channel occasion is subsequent to the first physical channel occasion.

The second physical channel occasion may be: an earliest physical channel occasion whose start symbol has a time interval no smaller than a predetermined duration from the first position of the first physical channel occasion; or an earliest physical channel occasion whose start symbol is no earlier than the first position of the first physical channel occasion by the predetermined duration.

The predetermined duration may be understood with reference to scheme I.

The indication manners of the first information in the scheme I and scheme II may include the following two:

### Indication manner I: indicating through a bitmap; and

Indication manner II: indicating a fourth physical channel occasion, and all subsequent physical channel occasions starting from the fourth physical channel in a current cycle being unused.

In the indication manner I, whether N physical channel occasions are usable may be indicated through a bitmap. Namely, the first information is in one-to-one correspondence with N channel occasions starting from the third physical channel occasion. A bit which is set to 1 indicates that a corresponding occasion is non-usable, and a bit which is set to 0 indicates that a corresponding occasion is usable, and vice versa.

With FIG. 9 as an example, UE is configured with 4 PUSCH occasions within a cycle, each PUSCH occasion occupies 14 time-domain symbols, and X = 10.

In an implementation, the first information may be transmitted at the earliest in the occasion 1; in this case, the range that may be indicated is largest, including the occasion 3 and the occasion 4. Only 2 bits of valid information need to be set in all the first information, corresponding to the occasion 3 and the occasion 4 respectively.

It is understandable that, with such a largest range, the first information transmitted in any physical channel occasion may include 2 bits, so as to reduce system complexity. When the first information of 2 bits is transmitted within the occasion 2, a 1^{st} bit indicates the occasion 4, and a 2^{nd} bit is reserved. Alternatively, the 1^{st} bit still corresponds to the occasion 3, but cannot indicate "unused" (the occasion 3 is not a second physical channel occasion for the occasion 2, namely the bit is reserved), and the 2^{nd} bit still corresponds to the occasion 4 and may indicate unused or used.

In another implementation, the UE may transmit the first information in the occasion 1, the first information includes 2 bit. In a case that the UE transmits the first information in the occasion 2, the first information includes only 1 bit of valid information, since only the occasion 4 may be indicated in this case. Such a scheme has the advantage of low signaling overhead.

For the bitmap indication manner, when the number of subsequent channel occasions starting from the third physical channel occasion is greater than the number Y of bits in the CG-UCI that can be used to indicate useless PUSCH occasions, the CG-UCI indicates whether foremost Y physical channel occasions starting from the second physical channel occasion are usable. The base station cannot determine whether other subsequent physical channel occasion(s) is(are) usable based on the first information.

### For the indication manner II:

The first information indicates a fourth physical channel occasion, all subsequent physical channel occasions starting from the fourth physical channel occasion in a current cycle being unused.

Different values of the first information indicate the fourth physical channel occasion as being different physical channel occasions in the cycle. The fourth physical channel occasion is one of the first physical channel occasion and physical channel occasions subsequent to the first physical channel occasion, as illustrated in Table 1

**Table 2 Example(s) of first relationship**

| First information | Fourth physical channel occasion |
|---|---|
| 00 | Third physical channel occasion |
| 01 | 1^{st} physical channel occasion subsequent to the third physical channel occasion |
| 10 | 2^{nd} physical channel occasion subsequent to the third physical channel occasion |
| 11 | 3^{rd} physical channel occasion subsequent to the third physical channel occasion |

The first information may be implemented to indicate an offset relative to a reference physical channel occasion. The reference physical channel occasion is the third physical channel occasion, or a first or last one of the M physical channel occasions, or the first physical channel occasion.

The offset may be implemented in following two manners:

Index offset: an offset of a physical channel occasion number.

In an example, as illustrated in Table 2, an offset = 0 corresponds to the third physical channel occasion, and an offset = 1 corresponds to a foremost physical channel occasion after the third physical channel occasion.

**Table 2 Example(s) of offset**

| First information | Offset |
|---|---|
| 00 | Offset=0 |
| 01 | Offset=1 |
| 10 | Offset=2 |
| 11 | Offset=3 |

Time offset: an offset of a time slot where a physical channel occasion is located.

As illustrated in Table 2, an offset = 0 indicates that a time slot offset of the fourth physical channel occasion relative to the reference physical channel occasion is 0, namely the fourth physical channel occasion is located within the time slot A where the reference physical channel occasion is located. An offset = 1 indicates that a time slot offset of the fourth physical channel occasion relative to the reference physical channel occasion is 1, namely the fourth physical channel occasion is located within the time slot A+1.

In the embodiments of the disclosure, a time slot may include multiple physical channel occasions, the starting physical channel occasion among the multiple physical channel occasions being a physical channel occasion indicated by the first information. Alternatively, the multiple physical channel occasions may include a physical channel occasion earlier than the third physical channel occasion, the second physical channel occasion being a physical channel occasion indicated by the first information.

In the embodiments of the disclosure, the terminal may receive configuration information from the base station to determine whether to use the indication manner I of the first information or the indication manner II of the first information. Alternatively, the terminal may determine whether to use the indication manner I of the first information or the indication manner II of the first information based on the value of N (or M). For example, the indication manner I of the first information is used when N is smaller than or equal to 4, and the indication manner II of the first information is used when N is greater than 4.

The indication manner I and the indication manner II of the first information may be respectively used in combination with scheme I or scheme II.

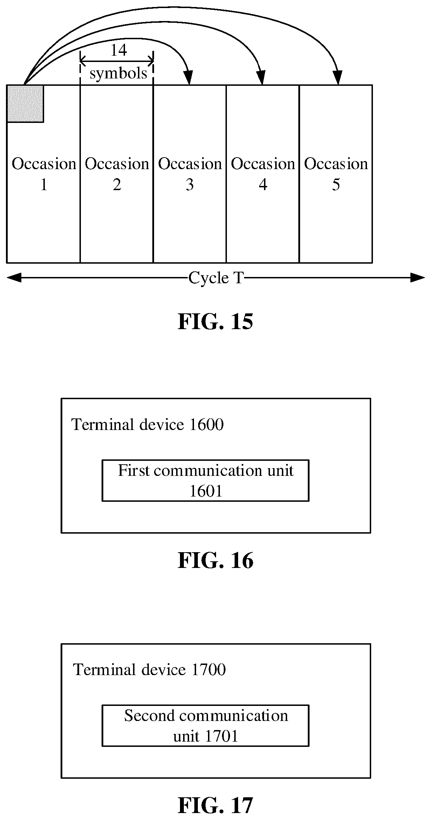

In an example, as illustrated in FIG. 15, UE is configured with 5 PUSCH occasions within a cycle, each PUSCH occasion occupies 14 time-domain symbols, and X = 10. The first information includes 2 bits. The terminal may transmit the first information in the occasion 1, and the first information may indicate whether subsequent occasions starting from the occasion 3 are usable. According to the indication manner of Table 1, the first information being 01 indicates that the occasion 4 and the occasion 5 are non-usable.

The first information is the same as CG-UCI in a coding mode, a rate matching mode, or a resource mapping mode. Alternatively, the base station may configure the CG-UCI to include the first information (namely a new information field parallel to an existing information field). Alternatively, part of information in the CG-UCI, for example an HARQ process number, RV information, or NDI information, may be reused for the first information.

In an implementation, the RV information and/or the NDI information in the CG-UCI may be used as the first information. In this case, the HARQ process number information may still indicate the HARQ process number of a current PUSCH.

Alternatively, all 7 bits in the CG-UCI may be used to indicate useless PUSCH occasions.

Preferred implementations of the disclosure are described in detail in conjunction with accompanying drawings. However, the disclosure is not limited to the particular details in the above implementations. Within the range of the technical idea of the disclosure, multiple simple variations can be made to the technical solutions of the disclosure, and these variations all fall within the scope of protection of the disclosure. For example, the particular technical features described in the above particular implementations may be combined in any suitable way without conflict. To avoid unnecessary repetition, possible combinations are not described in the disclosure. For example, different implementations of the disclosure may also be combined arbitrarily without departing from the concept of the disclosure, which shall be considered as content disclosed by the disclosure as well. For another, without conflict, the various embodiments described in the disclosure and/or technical features of the various embodiments may be combined with related art arbitrarily, and the technical solutions obtained via the combination shall also fall within the scope of protection of the disclosure.

It is also to be understood that, in the method embodiments of the disclosure, the sizes of the serial numbers of the above operations do not imply the sequential order in which the operations are performed, and shall not construe any limitation to the implementation of the embodiments of the disclosure. The order in which the operations are performed should be decided by their functions and internal logics. In addition, in the embodiments of the disclosure, the terms "downlink", "uplink" and "sidelink" are used for representing the transmission direction of signals or data. "Downlink" is used for representing the transmission direction of signals or data is a first direction of sending from a station to user equipment in a cell. "Uplink" is used for representing the transmission direction of signals or data is a second direction of sending from user equipment in a cell to a station. "Sidelink" is for representing the transmission direction of signals or data is a third direction of sending from user equipment 1 to user equipment 2. For example, "downlink signal" represents that the transmission signal of the direction is the first signal. In addition, in the embodiments of the disclosure, the term "and/or" herein merely describes a relation between associated objects, representing that three relations may exist. In particular, A and/or B may represent following three cases: existence of A alone, existence of both A and B, and existence of B alone. Additionally, the character "/" generally indicates that the contextual objects are in an "or" relationship.

FIG. 16 illustrates a first schematic structural diagram of composition of a terminal device according to embodiments of the disclosure. As illustrated in FIG. 16, the terminal device 1600 includes a first communication unit 1601.

The first communication unit 1601 is configured to transmit, in a first physical channel occasion, first information which is for indicating at least one second physical channel occasion. The first physical channel occasion and the at least one second physical channel occasion are located within a first cycle. The second physical channel occasion is an unused physical channel occasion. A first time constraint condition is met between the second physical channel occasion and the first physical channel occasion.

It is understandable that the terminal device 1600 may further include a storage unit configured to store configuration information indicating physical channel occasions in the first cycle.

In some embodiments, the first time constraint condition may include that: a time interval between a first position of the first physical channel occasion and a second position of the second physical channel occasion is greater than or equal to a first duration; or the second position of the second physical channel occasion is no earlier than a third position subsequent to the first position of the first physical channel occasion, a time interval between the first position of the first physical channel occasion and the third position being equal to the first duration.

In some embodiments, the first position may at least include one of: an end position of the first physical channel occasion; an end position of a time-domain symbol occupied by the first information; and an end position of a time slot in which the first physical channel occasion is located.

In some embodiments, the second position may at least include one of: a start position of the second physical channel occasion; and a start position of a time slot in which the second physical channel occasion is located.

In some embodiments, the first duration may include a first number of time-domain symbols or time slots.

In some embodiments, the first duration may be configured by a higher-layer signaling or agreed in a protocol.

In some embodiments, the first duration may be related to a subcarrier spacing.

In some embodiments, the first information may be same as configured grant-uplink control information (CG-UCI) in at least one of following aspects: a coding mode, a rate matching mode, and a resource mapping mode.

In some embodiments, the first communication unit 1601 may be configured to transmit, in the first physical channel occasion, first configured grant-uplink control information (CG-UCI). The first CG-UCI may include the first information.

In some embodiments, the first CG-UCI may include a first information field dedicated for carrying the first information.

In some embodiments, the first CG-UCI may include a second information field. The first CG-UCI may be scrambled using a first radio network temporary identifier (RNTI), the first information field carrying the first information; the first CG-UCI may be scrambled using a second RNTI, the first information field carrying second information. Alternatively, a third information field of the first CG-UCI may indicate a first value, the second information field carrying the first information; and the third information field may indicate a second value, the second information field carrying the second information. Alternatively, the first CG-UCI may correspond to a first time-domain position, the second information field carrying the first information; and the first CG-UCI may correspond to a second time-domain position, and the second information field carrying the second information.

In some embodiments, the first information may indicate the at least one second physical channel occasion in at least one of following manners: the first information indicating the at least one second physical channel occasion through a bitmap, a bit in the bitmap indicating whether a corresponding physical channel occasion is a second physical channel occasion; and the first information indicating a third physical channel occasion, the at least one second physical channel occasion including the third physical channel occasion and a physical channel occasion subsequent to the third physical channel occasion within the first cycle.

In some embodiments, a manner in which the first information indicates the at least one second physical channel occasion may be determined based on third information. The third information may include at least one of followings: first configuration information configured by a network device, with the first configuration information indicating the manner in which the first information indicates the at least one second physical channel occasion; the number of second physical channel occasions included in the at least one second physical channel occasion; and the number of physical channel occasions included in the first cycle.

In some embodiments, the first information may indicate the at least one second physical channel occasion through the bitmap, the first information including a second number of bits, and the second number may be determined in at least one of following manners: being configured by a network device; being agreed between the terminal device and the network device; and being determined according to a fourth physical channel occasion within the first cycle.

In some embodiments, the second number may be determined according to the fourth physical channel occasion within the first cycle; the second number may be the number of physical channel occasions within the first cycle that have a time interval greater than or equal to a first duration from the fourth physical channel occasion; or the second number may be the number of physical channel occasions starting from a fifth physical channel occasion in the first cycle, the fifth physical channel occasion being an earliest physical channel occasion among physical channel occasions within the first cycle that have a time interval greater than or equal to the first duration from the fourth physical channel occasion.

In some embodiments, the first information may indicate the third physical channel occasion, the first information indicating a first relationship between the third physical channel occasion and a sixth physical channel occasion.

In some embodiments, the sixth physical channel occasion may include at least one of: a starting physical channel occasion within the first cycle; the first physical channel occasion; an earliest physical channel occasion among physical channel occasions within the first cycle that have a time interval greater than or equal to a first duration from the first physical channel occasion; and a latest physical channel occasion within the first cycle.

In some embodiments, the first relationship indicated by the first information may include at least one of: a third number, the third number being the number of physical channel occasions by which the third physical channel occasion is offset relative to the sixth physical channel occasion; and a fourth number, the fourth number being the number of time units by which a first time unit is offset relative to a second time unit, the third physical channel occasion being located in the first time unit, and the sixth channel occasion being located in the second time unit.

In some embodiments, the first information may indicate the fourth number and the first time unit may include at least two physical channel occasions, the third physical channel occasion being an earliest physical channel occasion in the first time unit.

In some embodiments, the first information may include a fifth number of bits. The fifth number may be determined in at least one of following manners: being configured by a network device; being agreed between the terminal device and the network device; being determined based on the third number; being determined based on the fourth number; and being determined according to a fourth physical channel occasion within the first cycle.

In some embodiments, the fifth number may be determined according to the fourth physical channel occasion within the first cycle; the fifth number may be the number of physical channel occasions within the first cycle that have a time interval greater than or equal to a first duration from the fourth physical channel occasion; or the fifth number may be the number of physical channel occasions starting from a fifth physical channel occasion in the first cycle, the fifth physical channel occasion being an earliest physical channel occasion among physical channel occasions within the first cycle that have a time interval greater than or equal to the first duration from the fourth physical channel occasion.

In some embodiments, the fourth physical channel occasion may include at least one of: an earliest physical channel occasion within the first cycle; the first physical channel occasion; an earliest physical channel occasion among physical channel occasions within the first cycle that have a time interval greater than or equal to a first duration from the first physical channel occasion; and a latest physical channel occasion within the first cycle.

FIG. 17 illustrates a second schematic structural diagram of composition of a terminal device according to embodiments of the disclosure. As illustrated in FIG. 17, the terminal device includes a second communication unit 1701.

The second communication unit 1701 is configured to transmit first information in a first physical channel occasion. The first information is for indicating whether a physical channel occasion starting from a second physical channel occasion within a first cycle is used or unused. The first physical channel occasion and the second physical channel occasion are located within the first cycle. A first time constraint condition is met between the second physical channel occasion and the first physical channel occasion.

It is understandable that the terminal device 1700 may further include a storage unit configured to store configuration information indicating physical channel occasions in the first cycle.

It is understandable that in a case that a terminal device supports both functions of the first communication unit 1601 and the second communication unit 1701, the first communication unit 1601 and the second communication unit 1701 may be the same communication unit.

In some embodiments, the first time constraint condition may include that: the second physical channel occasion is an earliest physical channel occasion among physical channel occasions within the first cycle that have a first position with a time interval relative to a second position of the first physical channel occasion being greater than or equal to a first duration; or the second physical channel occasion is an earliest physical channel occasion among physical channel occasions that have a first position not earlier than a third position after the first physical channel occasion, and a time interval between the third position and the second position of the first physical channel occasion is greater than or equal to the first duration.

In some embodiments, the first position may at least include one of: a start position of the second physical channel occasion; and a start position of a time slot in which the second physical channel occasion is located.

In some embodiments, the second position may at least include one of: an end position of the second physical channel occasion; an end position of a time-domain symbol occupied by the first information; and an end position of a time slot in which the second physical channel occasion is located.

In some embodiments, the first duration may include a first number of time-domain symbols or time slots.

In some embodiments, the first duration may be configured by a higher-layer signaling or agreed in a protocol.

In some embodiments, the first duration may be related to a subcarrier spacing.

In some embodiments, the first information may be the same as configured grant-uplink control information (CG-UCI) in at least one of following aspects: a coding mode, a rate matching mode, and a resource mapping mode.

In some embodiments, the second communication unit 1701 may be further configured to transmit first configured grant-uplink control information (CG-UCI) in the first physical channel occasion. The first CG-UCI may include the first information.

In some embodiments, the first CG-UCI may include a first information field for carrying the first information.

In some embodiments, the first CG-UCI may include a second information field. The first CG-UCI may be scrambled using a first radio network temporary identifier (RNTI), the first information field carrying the first information; and the first CG-UCI may be scrambled using a second RNTI, the first information field carrying second information. Alternatively, a third information field of the first CG-UCI may indicate a first value, the second information field carrying the first information; and the third information field may indicate a second value, the second information field carrying the second information. Alternatively, the first CG-UCI may correspond to a first time-domain position, the second information field carrying the first information; and the first CG-UCI may correspond to a second time-domain position, the second information field carrying the second information.

In some embodiments, the first information may indicate whether the physical channel occasion starting from the second physical channel occasion within the first cycle is used or unused in at least one of following manners: the first information indicating, through a bitmap, whether the physical channel occasion starting from the second physical channel occasion within the first cycle is used or unused, a bit in the bitmap indicating whether a corresponding physical channel occasion is used or unused; and the first information indicating a third physical channel occasion, the third physical channel occasion and a physical channel occasion subsequent to the third physical channel occasion within the first cycle being unused.

In some embodiments, a manner in which the first information indicates whether the physical channel occasion starting from the second physical channel occasion within the first cycle is used or unused may be determined based on third information, and the third information may include at least one of followings: first configuration information configured by a network device, with the first configuration information indicating the manner in which the first information indicates whether the physical channel occasion starting from the second physical channel occasion within the first cycle is used or unused; the number of physical channel occasions starting from the second physical channel occasion within the first cycle; and the number of physical channel occasions included in the first cycle.

In some embodiments, the first information may indicate, through the bitmap, whether the physical channel occasion starting from the second physical channel occasion within the first cycle is used or unused, the first information including a second number of bits. The second number may be determined in at least one of following manners: being configured by a network device; being agreed between the terminal device and the network device; being determined according to a fourth physical channel occasion within the first cycle.

In some embodiments, the second number may be determined according to the fourth physical channel occasion within the first cycle; the second number may be the number of physical channel occasions within the first cycle that have a time interval greater than or equal to a first duration from the fourth physical channel occasion; or the second number may be the number of physical channel occasions starting from a fifth physical channel occasion in the first cycle, the fifth physical channel occasion being an earliest physical channel occasion among physical channel occasions within the first cycle that have a time interval greater than or equal to the first duration from the fourth physical channel occasion.

In some embodiments, the first information may indicate the third physical channel occasion, the first information indicating a first relationship between the third physical channel occasion and a sixth physical channel occasion.

In some embodiments, the sixth physical channel occasion may include at least one of: a starting physical channel occasion within the first cycle; the first physical channel occasion; an earliest physical channel occasion among physical channel occasions within the first cycle that have a time interval greater than or equal to a first duration from the first physical channel occasion; and a latest physical channel occasion within the first cycle.

In some embodiments, the first relationship indicated by the first information may include at least one of followings: a third number, the third number being the number of physical channel occasions by which the third physical channel occasion is offset relative to the sixth physical channel occasion; and a fourth number, the fourth number being the number of time units by which a first time unit is offset relative to a second time unit, the third physical channel occasion being located in the first time unit, and the seventh channel occasion being located in the second time unit.

In some embodiments, the first information may indicate the fourth number and the first time unit may include at least two physical channel occasions, the third physical channel occasion being an earliest physical channel occasion in the first time unit.

In some embodiments, the first information may include a fifth number of bits, and the fifth number may be determined in at least one of following manners: being configured by a network device; being agreed between the terminal device and the network device; being determined based on the third number; being determined based on the fourth number; and being determined according to a fourth physical channel occasion within the first cycle.

In some embodiments, the fifth number may be determined according to the fourth physical channel occasion within the first cycle; the fifth number may be the number of physical channel occasions within the first cycle that have a time interval greater than or equal to a first duration from the fourth physical channel occasion; or the fifth number may be the number of physical channel occasions starting from a fifth physical channel occasion in the first cycle, the fifth physical channel occasion being an earliest physical channel occasion among physical channel occasions within the first cycle that have a time interval greater than or equal to the first duration from the fourth physical channel occasion.

In some embodiments, the fourth physical channel occasion may include at least one of: a starting physical channel occasion within the first cycle; the first physical channel occasion; an earliest physical channel occasion among physical channel occasions within the first cycle that have a time interval greater than or equal to a first duration from the first physical channel occasion; and a latest physical channel occasion within the first cycle.

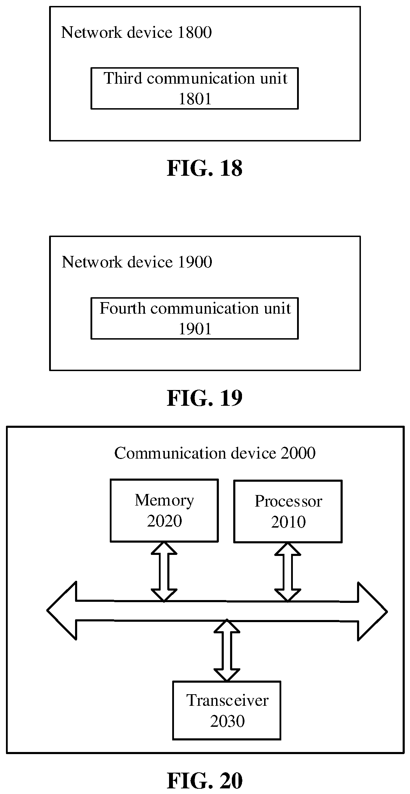

FIG. 18 illustrates a first schematic structural diagram of composition of a network device according to embodiments of the disclosure. As illustrated in FIG. 18, the terminal device 1800 includes a third communication unit 1801.

The third communication unit 1801 is configured to receive, in a first physical channel occasion, first information for indicating at least one second physical channel occasion. The first physical channel occasion and the at least one second physical channel occasion are located within a first cycle. The second physical channel occasion is an unused physical channel occasion, and a first time constraint condition is met between the second physical channel occasion and the first physical channel occasion.

It is understandable that the network device 1800 may further include a processing unit configured to parse the received first information.

In some embodiments, the first time constraint condition may include that: a time interval between a first position of the first physical channel occasion and a second position of the second physical channel occasion is greater than or equal to a first duration; or the second position of the second physical channel occasion is no earlier than a third position subsequent to the first position of the first physical channel occasion, a time interval between the first position of the first physical channel occasion and the third position being equal to the first duration.

In some embodiments, the first position may at least include one of: an end position of the first physical channel occasion; an end position of a time-domain symbol occupied by the first information and an end position of a time slot in which the first physical channel occasion is located.

In some embodiments, the second position may at least include one of: a start position of the second physical channel occasion; and a start position of a time slot in which the second physical channel occasion is located.

In some embodiments, the first duration may include a first number of time-domain symbols or time slots.

In some embodiments, the first duration may be configured by a higher-layer signaling or agreed in a protocol.

In some embodiments, the first duration may be related to a subcarrier spacing.

In some embodiments, the first information may be the same as configured grant-uplink control information (CG-UCI) in at least one of following aspects: a coding mode, a rate matching mode, and a resource mapping mode.

In some embodiments, the first communication unit 1601 may be configured to receive, in the first physical channel occasion, first configured grant-uplink control information (CG-UCI). The first CG-UCI may include the first information.

In some embodiments, the first CG-UCI may include a first information field dedicated for carrying the first information.

In some embodiments, the first CG-UCI may include a second information field. The first CG-UCI may be scrambled using a first radio network temporary identifier (RNTI), the first information field carrying the first information; and the first CG-UCI may be scrambled using a second RNTI, the first information field carrying second information. Alternatively, a third information field of the first CG-UCI may indicate a first value, the second information field carrying the first information; and the third information field may indicate a second value, the second information field carrying the second information. Alternatively, the first CG-UCI may correspond to a first time-domain position, the second information field carrying the first information; and the first CG-UCI may correspond to a second time-domain position, the second information field carrying the second information.

In some embodiments, the first information may indicate the at least one second physical channel occasion in at least one of following manners: the first information indicating the at least one second physical channel occasion through a bitmap, a bit in the bitmap indicating whether a corresponding physical channel occasion being a second physical channel occasion; and the first information indicating a third physical channel occasion, the at least one second physical channel occasion including the third physical channel occasion and a physical channel occasion subsequent to the third physical channel occasion within the first cycle.

In some embodiments, a manner in which the first information indicates the at least one second physical channel occasion may be determined based on third information, and the third information may include at least one of followings: first configuration information configured by the network device, with the first configuration information indicating the manner in which the first information indicates the at least one second physical channel occasion; the number of second physical channel occasions included in the at least one second physical channel occasion; and the number of physical channel occasions included in the first cycle.

In some embodiments, the first information may indicate the at least one second physical channel occasion through the bitmap, the first information including a second number of bits. The second number may be determined in at least one of following manners: being configured by the network device; being agreed between a terminal device and the network device; being determined according to a fourth physical channel occasion within the first cycle.

In some embodiments, the second number may be determined according to the fourth physical channel occasion within the first cycle; the second number may be the number of physical channel occasions within the first cycle that have a time interval greater than or equal to a first duration from the fourth physical channel occasion; or the second number may be the number of physical channel occasions starting from a fifth physical channel occasion in the first cycle, the fifth physical channel occasion being an earliest physical channel occasion among physical channel occasions within the first cycle that have a time interval greater than or equal to the first duration from the fourth physical channel occasion.

In some embodiments, the first information may indicate the third physical channel occasion, the first information indicating a first relationship between the third physical channel occasion and a sixth physical channel occasion.

In some embodiments, the sixth physical channel occasion may include at least one of: a starting physical channel occasion within the first cycle; the first physical channel occasion; an earliest physical channel occasion among physical channel occasions within the first cycle that have a time interval greater than or equal to a first duration from the first physical channel occasion; and a latest physical channel occasion within the first cycle.

In some embodiments, the first relationship indicated by the first information may include at least one of followings: a third number, with the third number being the number of physical channel occasions by which the third physical channel occasion is offset relative to the sixth physical channel occasion; and a fourth number, with the fourth number being the number of time units by which a first time unit is offset relative to a second time unit, the third physical channel occasion being located in the first time unit, and the sixth channel occasion being located in the second time unit.

In some embodiments, the first information may indicate the fourth number and the first time unit may include at least two physical channel occasions, the third physical channel occasion being an earliest physical channel occasion in the first time unit.

In some embodiments, the first information may include a fifth number of bits. The fifth number may be determined in at least one of following manners: being configured by a network device; being agreed between a terminal device and the network device; being determined based on the third number; being determined based on the fourth number; and being determined according to a fourth physical channel occasion within the first cycle.

In some embodiments, the fifth number may be determined according to the fourth physical channel occasion within the first cycle; the fifth number is the number of physical channel occasions within the first cycle that have a time interval greater than or equal to a first duration from the fourth physical channel occasion; or the fifth number is the number of physical channel occasions starting from a fifth physical channel occasion in the first cycle, the fifth physical channel occasion being an earliest physical channel occasion among physical channel occasions within the first cycle that have a time interval greater than or equal to the first duration from the fourth physical channel occasion.

In some embodiments, the fourth physical channel occasion may include at least one of: an earliest physical channel occasion within the first cycle; the first physical channel occasion; an earliest physical channel occasion among physical channel occasions within the first cycle that have a time interval greater than or equal to a first duration from the first physical channel occasion; and a latest physical channel occasion within the first cycle.

FIG. 19 illustrates a second schematic structural diagram of composition of a network device according to embodiments of the disclosure. As illustrated in FIG. 19, the network device 1900 includes a fourth communication unit 1901.

The fourth communication unit 1901 is configured to receive first information in a first physical channel occasion. The first information is for indicating whether a physical channel occasion starting from a second physical channel occasion within a first cycle is used or unused. The first physical channel occasion and the second physical channel occasion are located within the first cycle. A first time constraint condition is met between the second physical channel occasion and the first physical channel occasion.

It is understandable that the network device 1900 may further include a processing unit configured to parse the received first information.

It is understandable that in a case that a network device supports both functions of the third communication unit 1801 and the fourth communication unit 1901, the third communication unit 1801 and the fourth communication unit 1901 may be the same communication unit.

In some embodiments, the first time constraint condition may include that: the second physical channel occasion is an earliest physical channel occasion among physical channel occasions within the first cycle that have a first position with a time interval relative to a second position of the first physical channel occasion being greater than or equal to a first duration; or the second physical channel occasion is an earliest physical channel occasion among physical channel occasions that have a first position not earlier than a third position after the first physical channel occasion, and a time interval between the third position and the second position of the first physical channel occasion is greater than or equal to the first duration.

In some embodiments, the first position may at least include one of: a start position of the second physical channel occasion; and a start position of a time slot in which the second physical channel occasion is located.

In some embodiments, the second position may at least include one of: an end position of the second physical channel occasion; an end position of a time-domain symbol occupied by the first information; and an end position of a time slot in which the second physical channel occasion is located.

In some embodiments, the first duration may include a first number of time-domain symbols or time slots.

In some embodiments, the first duration may be configured by a higher-layer signaling or agreed in a protocol.

In some embodiments, the first duration may be related to a subcarrier spacing.

In some embodiments, the first information may be the same as configured grant-uplink control information (CG-UCI) in at least one of following aspects: a coding mode, a rate matching mode, and a resource mapping mode.

In some embodiments, the fourth communication unit 1901 may be further configured to receive, in the first physical channel occasion, first configured grant-uplink control information (CG-UCI). The first CG-UCI may include the first information.

In some embodiments, the first CG-UCI may include a first information field for carrying the first information.

In some embodiments, the first CG-UCI may include a second information field. The first CG-UCI may be scrambled using a first radio network temporary identifier (RNTI), the first information field carrying the first information; and the first CG-UCI may be scrambled using a second RNTI, the first information field carrying second information. Alternatively, a third information field of the first CG-UCI may indicate a first value, the second information field carrying the first information; and the third information field may indicate a second value, the second information field carrying the second information. Alternatively, the first CG-UCI may correspond to a first time-domain position, the second information field carrying the first information; and the first CG-UCI may correspond to a second time-domain position, the second information field carrying the second information.

In some embodiments, the first information may indicate whether the physical channel occasion starting from the second physical channel occasion within the first cycle is used or unused in at least one of following manners: the first information indicating, through a bitmap, whether the physical channel occasion starting from the second physical channel occasion within the first cycle is used or unused, and a bit in the bitmap indicating whether a corresponding physical channel occasion is used or unused; and the first information indicating a third physical channel occasion, and the third physical channel occasion and a physical channel occasion subsequent to the third physical channel occasion within the first cycle being unused.

In some embodiments, a manner in which the first information indicates whether the physical channel occasion starting from the second physical channel occasion within the first cycle is used or unused may be determined based on third information, and the third information may include at least one of followings: first configuration information configured by a network device, with the first configuration information indicating the manner in which the first information indicates whether the physical channel occasion starting from the second physical channel occasion within the first cycle is used or unused; the number of physical channel occasions starting from the second physical channel occasion within the first cycle; and the number of physical channel occasions included in the first cycle.

In some embodiments, the first information may indicate, through the bitmap, whether the physical channel occasion starting from the second physical channel occasion within the first cycle is used or unused, the first information including a second number of bits. The second number may be determined in at least one of following manners: being configured by the network device; being agreed between a terminal device and the network device; being determined according to a fourth physical channel occasion within the first cycle.

In some embodiments, the second number may be determined according to the fourth physical channel occasion within the first cycle; the second number is the number of physical channel occasions within the first cycle that have a time interval greater than or equal to a first duration from the fourth physical channel occasion; or the second number is the number of physical channel occasions starting from a fifth physical channel occasion in the first cycle the fifth physical channel occasion being an earliest physical channel occasion among physical channel occasions within the first cycle that have a time interval greater than or equal to the first duration from the fourth physical channel occasion.

In some embodiments, the first information may indicate the third physical channel occasion, the first information indicating a first relationship between the third physical channel occasion and a sixth physical channel occasion.

In some embodiments, the sixth physical channel occasion may include at least one of: a starting physical channel occasion within the first cycle; the first physical channel occasion; an earliest physical channel occasion among physical channel occasions within the first cycle that have a time interval greater than or equal to a first duration from the first physical channel occasion; and a latest physical channel occasion within the first cycle.

In some embodiments, the first relationship indicated by the first information may include at least one of: a third number, the third number being the number of physical channel occasions by which the third physical channel occasion is offset relative to the sixth physical channel occasion; and a fourth number, the fourth number being the number of time units by which a first time unit is offset relative to a second time unit, the third physical channel occasion being located in the first time unit, and the seventh channel occasion being located in the second time unit.

In some embodiments, the first information may indicate the fourth number and the first time unit may include at least two physical channel occasions, the third physical channel occasion being an earliest physical channel occasion in the first time unit.

In some embodiments, the first information may include a fifth number of bits. The fifth number may be determined in at least one of following manners: being configured by the network device; being agreed between a terminal device and the network device; being determined based on the third number; being determined based on the fourth number; and being determined according to a fourth physical channel occasion within the first cycle.

In some embodiments, the fifth number may be determined according to the fourth physical channel occasion within the first cycle; the fifth number is the number of physical channel occasions within the first cycle that have a time interval greater than or equal to a first duration from the fourth physical channel occasion; or the fifth number is the number of physical channel occasions starting from a fifth physical channel occasion in the first cycle, the fifth physical channel occasion being an earliest physical channel occasion among physical channel occasions within the first cycle that have a time interval greater than or equal to the first duration from the fourth physical channel occasion.

In some embodiments, the fourth physical channel occasion may include at least one of: a starting physical channel occasion within the first cycle; the first physical channel occasion; an earliest physical channel occasion among physical channel occasions within the first cycle that have a time interval greater than or equal to a first duration from the first physical channel occasion; and a latest physical channel occasion within the first cycle.

Those skilled in the art should understand that relevant description of the above terminal device and network device according to the embodiments of the disclosure can be understood with reference to the relevant description of the method for indicating a transmission resource according to the embodiments of the disclosure.

FIG. 20 illustrates a schematic structural diagram of a communication device 2000 according to embodiments of the disclosure. The communication device may be a terminal device, or may be a network device. The communication device 2000 as illustrated in FIG. 20 includes a processor 2010. The processor 2010 may call and run a computer program from a memory to implement the method according to the embodiments of the disclosure.

Optionally, as illustrated in FIG. 20, the communication device 2000 may further include a memory 2020. The processor 2010 may call and run a computer program from the memory 2020 to implement the method according to the embodiments of the disclosure.

The memory 2020 may be a device independent from the processor 2010, or may be integrated in the processor 2010.

Optionally, as illustrated in FIG. 20, the communication device 2000 may further include a transceiver 2030. The processor 2010 may control the transceiver 2030 to communicate with other devices, in particular to send information or data to other devices or receive information or data from other device.

The transceiver 2030 may include a transmitter and a receiver. The transceiver 2030 may further include an antenna, and there may be one or more antennas.

Optionally, the communication device 2000 may particularly be the network device of the embodiments of the disclosure, and the communication device 2000 may implement corresponding procedures that are implemented by the network device in various methods according to the embodiments of the disclosure, which is not described here again for simplicity.

Optionally, the communication device 2000 may particularly be a mobile terminal/terminal device according to the embodiments of the disclosure, and the communication device 2000 may implement corresponding procedures that are implemented by the mobile terminal/terminal device in various methods according to the embodiments of the disclosure, which is not described here again for simplicity.

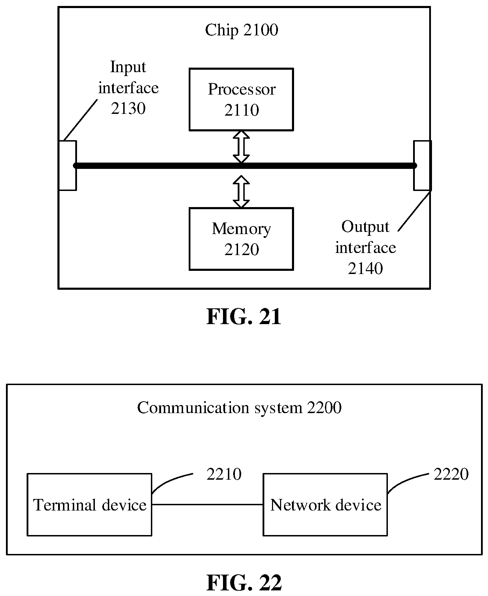

FIG. 21 illustrates a schematic structural diagram of a chip according to embodiments of the disclosure. The chip 2100 as illustrated in FIG. 21 includes a processor 2110. The processor 2110 may call and run a computer program from a memory to implement the method according to the embodiments of the disclosure.

Optionally, as illustrated in FIG. 21, the chip 2100 may further include a memory 2120. The processor 2110 may call and run a computer program from the memory 2120 to implement the method according to the embodiments of the disclosure.

The memory 2120 may be a device independent from the processor 2110, or may be integrated in the processor 2110.

Optionally, the chip 2100 may further include an input interface 2130. The processor 2110 may control the input interface 2130 to communicate with other devices or chips, in particularly to acquire information or data sent by other devices or chips.

Optionally, the chip 2100 may further include an output interface 2140. The processor 2110 may control the output interface 2140 to communicate with other devices or chips, in particularly to output information or data to other devices or chips.

Optionally, the chip may be implemented by the network device of the embodiments of the disclosure, and the chip may implement corresponding procedures that are implemented by the network device in various methods according to the embodiments of the disclosure, which is not described here again for simplicity.

Optionally, the chip may be implemented by a mobile terminal/terminal device according to the embodiments of the disclosure, and the chip may implement corresponding procedures that are implemented by the mobile terminal/terminal device in various methods according to the embodiments of the disclosure, which is not described here again for simplicity.

It should be understood that, the chip mentioned in the embodiments of the disclosure may also be referred to as a system-level chip, a system chip, a chip system or a system-on-chip.

FIG. 22 illustrates a schematic block diagram of a communication system 2200 according to embodiments of the disclosure. As illustrated in FIG. 22, the communication system 2200 includes a terminal device 2210 and a network device 2220.

The terminal device 2210 may be implemented by implement corresponding functions implemented by a terminal device in the above methods, and the network device 2220 may be implemented by implement corresponding functions implemented by a network device in the above methods, which is not described here again for simplicity.

It should be understood that the processor of the embodiments of the disclosure may be an integrated circuit chip, and has the capability of signal processing. During implementation, the various steps of in the above method embodiment may be completed by an integrated logic circuit in hardware form or instructions in software form in a processor. The above processor may be a general-purpose processor, a digital signal processor (DSP), an application specific integrated circuit (ASIC), a field programmable gate array (FPGA), or another programmable logical device, a discrete gate or a transistor logical device, or a discrete hardware component. The first processor may implement or perform the various methods, steps or logic blocks disclosed in the embodiments of the disclosure. The universal processor may be a microprocessor or the processor may also be any conventional processor and the like. The steps of the methods disclosed in combination with the embodiments of the disclosure may be directly embodied as being performed and completed by a hardware decoding processor, or being performed and completed by a combination of hardware and software modules in a decoding processor. The software module may be located in a mature storage medium in the art such as a random access memory, a flash memory, a read-only memory, a programmable read-only memory, an electrically erasable programmable, or a register. The storage medium is in a memory, and a processor reads information from the memory to implement steps of the above methods in combination with the hardware.

It may be understood that the memory in the embodiments of the disclosure may be a volatile memory or a non-volatile memory, or may include both a volatile memory and a non-volatile memory. The non-volatile memory may be a read-only memory (ROM), a programmable ROM (PROM), an erasable PROM (RPROM), an electrically RPROM (EEPROM), or a flash memory. The volatile memory may be a random access memory (RAM), that is used as an external cache. By way of example, but not limiting description, RAMs in many forms are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a directly rambus RAM (DR RAM). It should be noted that, the memory in the system and method described herein is intended to include but not limited to memories of these and any other suitable types.

It should be understood that the memories are exemplary but not limiting description. For example, the memory in the embodiments of the disclosure may also be a static RAM (SRAM), a dynamic RAM (DRAM), a synchronous DRAM (SDRAM), a double data rate SDRAM (SSD SDRAM), an enhanced SDRAM (ESDRAM), a synch link DRAM (SLDRAM), or a direct Rambus RAM (DR RAM). That is to say, the memory in the embodiments of the disclosure is intended to include but not limited to memories of these and any other suitable types.

Embodiments of the disclosure further provide a computer-readable storage medium for storing a computer program.

Optionally, the computer-readable storage medium may be implemented by the network device of the embodiments of the disclosure, and the computer program enables a computer to implement corresponding procedures that are implemented by the network device in various methods according to the embodiments of the disclosure, which is not described here again for simplicity.

Optionally, the computer-readable storage medium may be implemented by a mobile terminal/terminal device according to the embodiments of the disclosure, and the computer program enables a computer to implement corresponding procedures that are implemented by the mobile terminal/terminal device in various methods according to the embodiments of the disclosure, which is not described here again for simplicity.

Embodiments of the disclosure further provide a computer program product including computer program instructions.

Optionally, the computer program product may be implemented by the network device of the embodiments of the disclosure, and instructions of the computer program product enable a computer to implement corresponding procedures that are implemented by the network device in various methods according to the embodiments of the disclosure, which is not described here again for simplicity.

Optionally, the computer program product may be implemented by a mobile terminal/terminal device according to the embodiments of the disclosure, and instructions of the computer program product enable a computer to implement corresponding procedures that are implemented by the mobile terminal/terminal device in various methods according to the embodiments of the disclosure, which is not described here again for simplicity.

Embodiments of the disclosure further provide a computer program.

Optionally, the computer program may be implemented by the network device of the embodiments of the disclosure, and the computer program, when run on a computer, enables the computer to implement corresponding procedures that are implemented by the network device in various methods according to the embodiments of the disclosure, which is not described here again for simplicity.

Optionally, the computer program may be implemented by a mobile terminal/terminal device according to the embodiments of the disclosure, and the computer program, when run on a computer, enables the computer to implement corresponding procedures that are implemented by the mobile terminal/terminal device in various methods according to the embodiments of the disclosure, which is not described here again for simplicity.

Those of ordinary skill in the art may realize that the units and algorithm steps of various examples described in combination with the embodiments disclosed herein may be implemented by electronic hardware, or a combination of computer software and electronic hardware. Whether the functions are performed in form of hardware or software form depends on the specific application and design constraint conditions of the technical solution. Professionals may use a different method to realize the described function for each specific application, and such implementation should not be construed as extending beyond the scope of the disclosure

Those skilled in the art may clearly appreciate that for convenience and simplicity of description, the particular operation procedures of the system, apparatus and units described above may refer to corresponding procedures in the foregoing method embodiment, which will not be described herein again.

In some embodiments provided in the disclosure, it is to be understood that the disclosed system, device and method may be implemented in other manners. For example, the device embodiment described above is only exemplary, and for example, division of the units is only division in logic functions, and division may be made in other manners during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solution of the embodiments according to actual requirements.

Additionally, various functional units in the embodiments of the disclosure may be integrated in one processing unit, or may exist separately physically; or two or more units may be integrated in one unit.

If implemented in form of software functional units and sold or used as independent product, the functions may be stored in a computer-readable storage medium. Based on such understanding, the technical solution of the disclosure substantially or in part making contributions to related art or a part of the technical solution may be embodied in a software product. The computer software product is stored in a storage medium, and includes several instructions to enable a computer device (which may be a personal computer, a server, a network device or the like) to perform all or some steps of the method according to various embodiments of the disclosure. The foregoing storage medium includes various media capable of storage program codes such as a USB flash drive, a mobile hard disk drive, a read-only memory (ROM), a random access memory (RAM), a magnetic disc, or a compact disc (CD).

Stated above is merely detailed description of the disclosure, but the scope of protection of the disclosure is not limited thereto. Any modification or replacement that are easily conceivable by those familiar with related art within the technical range disclosed by the disclosure shall fall within the scope of protection of the disclosure. Therefore, the scope of protection of the disclosure should be subjected to the claimed scope of the claims.

## Claims

1. A method for indicating a transmission resource, comprising:
transmitting, by a terminal device in a first physical channel occasion, first information which is for indicating at least one second physical channel occasion, wherein the first physical channel occasion and the at least one second physical channel occasion are located within a first cycle, the second physical channel occasion is an unused physical channel occasion, and a first time constraint condition is met between the second physical channel occasion and the first physical channel occasion.

2. The method of claim 1, wherein the first time constraint condition comprises:
a time interval between a first position of the first physical channel occasion and a second position of the second physical channel occasion is greater than or equal to a first duration; or
the second position of the second physical channel occasion is no earlier than a third position subsequent to the first position of the first physical channel occasion, wherein a time interval between the first position of the first physical channel occasion and the third position is equal to the first duration.

3. The method of claim 2, wherein the first position at least comprises one of:
an end position of the first physical channel occasion;
an end position of a time-domain symbol occupied by the first information; and
an end position of a time slot in which the first physical channel occasion is located.

4. The method of claim 2, wherein the second position at least comprises one of:
a start position of the second physical channel occasion; and
a start position of a time slot in which the second physical channel occasion is located.

5. The method of any one of claims 2 to 4, wherein the first duration comprises a first number of time-domain symbols or time slots.

6. The method of any one of claims 2 to 5, wherein the first duration is configured by a higher-layer signaling or agreed in a protocol.

7. The method of any one of claims 2 to 6, wherein the first duration is related to a subcarrier spacing.

8. The method of any one of claims 1 to 7, wherein the first information is same as configured grant-uplink control information (CG-UCI) in at least one of followings:
a coding mode, a rate matching mode, and a resource mapping mode.

9. The method of any one of claims 1 to 7, wherein transmitting, by the terminal device in the first physical channel occasion, the first information comprises:
transmitting, by the terminal device in the first physical channel occasion, first configured grant-uplink control information (CG-UCI), wherein the first CG-UCI comprises the first information.

10. The method of claim 9, wherein the first CG-UCI comprises a first information field for carrying the first information.

11. The method of claim 9, wherein the first CG-UCI comprises a second information field; and
in a case that the first CG-UCI is scrambled using a first radio network temporary identifier (RNTI), the first information field carries the first information; and in a case that the first CG-UCI is scrambled using a second RNTI, the first information field carries second information; or
in a case that a third information field of the first CG-UCI indicates a first value, the second information field carries the first information; and in a case that the third information field indicates a second value, the second information field carries the second information; or
in a case that the first CG-UCI corresponds to a first time-domain position, the second information field carries the first information; and in a case that the first CG-UCI corresponds to a second time-domain position, the second information field carries the second information.

12. The method of any one of claims 1 to 11, wherein the first information indicates the at least one second physical channel occasion in at least one of following manners:
the first information indicates the at least one second physical channel occasion through a bitmap, wherein a bit in the bitmap indicates whether a corresponding physical channel occasion is a second physical channel occasion; and
the first information indicates a third physical channel occasion, and the at least one second physical channel occasion comprises the third physical channel occasion and a physical channel occasion subsequent to the third physical channel occasion within the first cycle.

13. The method of claim 12, wherein a manner in which the first information indicates the at least one second physical channel occasion is determined based on third information, and the third information comprises at least one of:
first configuration information configured by a network device, wherein the first configuration information indicates the manner in which the first information indicates the at least one second physical channel occasion;
a number of second physical channel occasions comprised in the at least one second physical channel occasion; and
a number of physical channel occasions comprised in the first cycle.

14. The method of claim 12 or 13, wherein when the first information indicates the at least one second physical channel occasion through the bitmap, the first information comprises a second number of bits, and the second number is determined in at least one of following manners:
being configured by a network device;
being agreed between the terminal device and the network device; and
being determined according to a fourth physical channel occasion within the first cycle.

15. The method of claim 14, wherein when the second number is determined according to the fourth physical channel occasion within the first cycle,
the second number is a number of physical channel occasions within the first cycle that have a time interval greater than or equal to a first duration from the fourth physical channel occasion; or
the second number is a number of physical channel occasions starting from a fifth physical channel occasion in the first cycle, wherein the fifth physical channel occasion is an earliest physical channel occasion among physical channel occasions within the first cycle that have a time interval greater than or equal to the first duration from the fourth physical channel occasion.

16. The method of claim 12 or 13, wherein when the first information indicates the third physical channel occasion, the first information indicates a first relationship between the third physical channel occasion and a sixth physical channel occasion.

17. The method of claim 16, wherein the sixth physical channel occasion comprises at least one of:
a starting physical channel occasion within the first cycle;
the first physical channel occasion;
an earliest physical channel occasion among physical channel occasions within the first cycle that have a time interval greater than or equal to a first duration from the first physical channel occasion; and
a latest physical channel occasion within the first cycle.

18. The method of claim 16 or 17, wherein the first relationship indicated by the first information comprises at least one of:
a third number, wherein the third number is a number of physical channel occasions by which the third physical channel occasion is offset relative to the sixth physical channel occasion; and
a fourth number, wherein the fourth number is a number of time units by which a first time unit is offset relative to a second time unit, the third physical channel occasion is located in the first time unit, and the sixth channel occasion is located in the second time unit.

19. The method of claim 18, wherein when the first information indicates the fourth number and the first time unit comprises at least two physical channel occasions, the third physical channel occasion is an earliest physical channel occasion in the first time unit.

20. The method of claim 18, wherein the first information comprises a fifth number of bits, and the fifth number is determined in at least one of following manners:
being configured by a network device;
being agreed between the terminal device and the network device;
being determined based on the third number;
being determined based on the fourth number; and
being determined according to a fourth physical channel occasion within the first cycle.

21. The method of claim 20, wherein when the fifth number is determined according to the fourth physical channel occasion within the first cycle,
the fifth number is a number of physical channel occasions within the first cycle that have a time interval greater than or equal to a first duration from the fourth physical channel occasion; or
the fifth number is a number of physical channel occasions starting from a fifth physical channel occasion in the first cycle, wherein the fifth physical channel occasion is an earliest physical channel occasion among physical channel occasions within the first cycle that have a time interval greater than or equal to the first duration from the fourth physical channel occasion.

22. The method of claim 14, 15, 20 or 21, wherein the fourth physical channel occasion comprises at least one of:
an earliest physical channel occasion within the first cycle;
the first physical channel occasion;
an earliest physical channel occasion among physical channel occasions within the first cycle that have a time interval greater than or equal to a first duration from the first physical channel occasion; and
a latest physical channel occasion within the first cycle.

23. A method for indicating a transmission resource, comprising:
transmitting, by a terminal device in a first physical channel occasion, first information, wherein the first information is for indicating whether a physical channel occasion starting from a second physical channel occasion within a first cycle is used or unused, the first physical channel occasion and the second physical channel occasion are located within the first cycle, and a first time constraint condition is met between the second physical channel occasion and the first physical channel occasion.

24. The method of claim 23, wherein the first time constraint condition comprises:
the second physical channel occasion is an earliest physical channel occasion among physical channel occasions within the first cycle that have a first position with a time interval relative to a second position of the first physical channel occasion being greater than or equal to a first duration; or
the second physical channel occasion is an earliest physical channel occasion among physical channel occasions that have a first position no earlier than a third position subsequent to the first physical channel occasion, and a time interval between the third position and the second position of the first physical channel occasion is greater than or equal to the first duration.

25. The method of claim 24, wherein the first position at least comprises one of:
a start position of the second physical channel occasion; and
a start position of a time slot in which the second physical channel occasion is located.

26. The method of claim 24, wherein the second position at least comprises one of:
an end position of the second physical channel occasion;
an end position of a time-domain symbol occupied by the first information; and
an end position of a time slot in which the second physical channel occasion is located.

27. The method of any one of claims 24 to 26, wherein the first duration comprises a first number of time-domain symbols or time slots.

28. The method of any one of claims 24 to 27, wherein the first duration is configured by a higher-layer signaling or agreed in a protocol.

29. The method of any one of claims 24 to 28, wherein the first duration is related to a subcarrier spacing.

30. The method of any one of claims 23 to 29, wherein the first information is same as configured grant-uplink control information (CG-UCI) in at least one of followings:
a coding mode, a rate matching mode, and a resource mapping mode.

31. The method of any one of claims 23 to 29, wherein transmitting, by the terminal device in the first physical channel occasion, the first information comprises:
transmitting, by the terminal device, first configured grant-uplink control information (CG-UCI) in the first physical channel occasion, wherein the first CG-UCI comprises the first information.

32. The method of claim 31, wherein the first CG-UCI comprises a first information field for carrying the first information.

33. The method of claim 31, wherein the first CG-UCI comprises a second information field; and
in a case that the first CG-UCI is scrambled using a first radio network temporary identifier (RNTI), the first information field carries the first information; and in a case that the first CG-UCI is scrambled using a second RNTI, the first information field carries second information; or
in a case that a third information field of the first CG-UCI indicates a first value, the second information field carries the first information; and in a case that the third information field indicates a second value, the second information field carries the second information; or
in a case that the first CG-UCI corresponds to a first time-domain position, the second information field carries the first information; and in a case that the first CG-UCI corresponds to a second time-domain position, the second information field carries the second information.

34. The method of any one of claims 23 to 33, wherein the first information indicates whether the physical channel occasion starting from the second physical channel occasion within the first cycle is used or unused in at least one of following manners:
the first information indicates, through a bitmap, whether the physical channel occasion starting from the second physical channel occasion within the first cycle is used or unused, wherein a bit in the bitmap indicates whether a corresponding physical channel occasion is used or unused; and
the first information indicates a third physical channel occasion, and the third physical channel occasion and a physical channel occasion subsequent to the third physical channel occasion within the first cycle are unused.

35. The method of claim 34, wherein a manner in which the first information indicates whether the physical channel occasion starting from the second physical channel occasion within the first cycle is used or unused is determined based on third information, and the third information comprises at least one of followings:
first configuration information configured by a network device, wherein the first configuration information indicates the manner in which the first information indicates whether the physical channel occasion starting from the second physical channel occasion within the first cycle is used or unused;
a number of physical channel occasions starting from the second physical channel occasion within the first cycle; and
a number of physical channel occasions comprised in the first cycle.

36. The method of claim 34 or 35, wherein when the first information indicates, through the bitmap, whether the physical channel occasion starting from the second physical channel occasion within the first cycle is used or unused, the first information comprises a second number of bits, and the second number is determined in at least one of following manners:
being configured by a network device;
being agreed between the terminal device and the network device;
being determined according to a fourth physical channel occasion within the first cycle.

37. The method of claim 36, wherein when the second number is determined according to the fourth physical channel occasion within the first cycle,
the second number is a number of physical channel occasions within the first cycle that have a time interval greater than or equal to a first duration from the fourth physical channel occasion; or
the second number is a number of physical channel occasions starting from a fifth physical channel occasion in the first cycle, wherein the fifth physical channel occasion is an earliest physical channel occasion among physical channel occasions within the first cycle that have a time interval greater than or equal to the first duration from the fourth physical channel occasion.

38. The method of claim 34 or 35, wherein when the first information indicates the third physical channel occasion, the first information indicates a first relationship between the third physical channel occasion and a sixth physical channel occasion.

39. The method of claim 38, wherein the sixth physical channel occasion comprises at least one of:
a starting physical channel occasion within the first cycle;
the first physical channel occasion;
an earliest physical channel occasion among physical channel occasions within the first cycle that have a time interval greater than or equal to a first duration from the first physical channel occasion; and
a latest physical channel occasion within the first cycle.

40. The method of claim 38 or 39, wherein the first relationship indicated by the first information comprises at least one of:
a third number, wherein the third number is a number of physical channel occasions by which the third physical channel occasion is offset relative to the sixth physical channel occasion; and
a fourth number, wherein the fourth number is a number of time units by which a first time unit is offset relative to a second time unit, the third physical channel occasion is located in the first time unit, and the seventh channel occasion is located in the second time unit.

41. The method of claim 40, wherein when the first information indicates the fourth number and the first time unit comprises at least two physical channel occasions, the third physical channel occasion is an earliest physical channel occasion in the first time unit.

42. The method of claim 40, wherein the first information comprises a fifth number of bits, and the fifth number is determined in at least one of following manners:
being configured by a network device;
being agreed between the terminal device and the network device;
being determined based on the third number;
being determined based on the fourth number; and
being determined according to a fourth physical channel occasion within the first cycle.

43. The method of claim 42, wherein when the fifth number is determined according to the fourth physical channel occasion within the first cycle,
the fifth number is a number of physical channel occasions within the first cycle that have a time interval greater than or equal to a first duration from the fourth physical channel occasion; or
the fifth number is a number of physical channel occasions starting from a fifth physical channel occasion in the first cycle, wherein the fifth physical channel occasion is an earliest physical channel occasion among physical channel occasions within the first cycle that have a time interval greater than or equal to the first duration from the fourth physical channel occasion.

44. The method of claim 36, 37, 42 or 43, wherein the fourth physical channel occasion comprises at least one of:
a starting physical channel occasion within the first cycle;
the first physical channel occasion;
an earliest physical channel occasion among physical channel occasions within the first cycle that have a time interval greater than or equal to a first duration from the first physical channel occasion; and
a latest physical channel occasion within the first cycle.

45. A method for indicating a transmission resource, comprising:
receiving, by a network device in a first physical channel occasion, first information for indicating at least one second physical channel occasion, wherein the first physical channel occasion and the at least one second physical channel occasion are located within a first cycle, the second physical channel occasion is an unused physical channel occasion, and a first time constraint condition is met between the second physical channel occasion and the first physical channel occasion.

46. The method of claim 45, wherein the first time constraint condition comprises:
a time interval between a first position of the first physical channel occasion and a second position of the second physical channel occasion is greater than or equal to a first duration; or
the second position of the second physical channel occasion is no earlier than a third position subsequent to the first position of the first physical channel occasion, wherein a time interval between the first position of the first physical channel occasion and the third position is equal to the first duration.

47. The method of claim 46, wherein the first position at least comprises one of:
an end position of the first physical channel occasion; and
an end position of a time slot in which the first physical channel occasion is located.

48. The method of claim 46, wherein the second position at least comprises one of:
a start position of the second physical channel occasion; and
a start position of a time slot in which the second physical channel occasion is located.

49. The method of any one of claims 46 to 48, wherein the first duration comprises a first number of time-domain symbols or time slots.

50. The method of claim 46 or 47, wherein the first duration is configured by a higher-layer signaling or agreed in a protocol.

51. The method of any one of claims 46 to 50, wherein the first duration is related to a subcarrier spacing.

52. The method of any one of claims 45 to 51, wherein the first information is same as configured grant-uplink control information (CG-UCI) in at least one of followings:
a coding mode, a rate matching mode, and a resource mapping mode.

53. The method of any one of claims 45 to 51, wherein receiving, by the network device in the first physical channel occasion, the first information comprises:
receiving, by the network device in the first physical channel occasion, first configured grant-uplink control information (CG-UCI), wherein the first CG-UCI comprises the first information.

54. The method of claim 53, wherein the first CG-UCI comprises a first information field for carrying the first information.

55. The method of claim 53, wherein the first CG-UCI comprises a second information field; and
in a case that the first CG-UCI is scrambled using a first radio network temporary identifier (RNTI), the first information field carries the first information; and in a case that the first CG-UCI is scrambled using a second RNTI, the first information field carries second information; or
in a case that a third information field of the first CG-UCI indicates a first value, the second information field carries the first information; and in a case that the third information field indicates a second value, the second information field carries the second information; or
in a case that the first CG-UCI corresponds to a first time-domain position, the second information field carries the first information; and in a case that the first CG-UCI corresponds to a second time-domain position, the second information field carries the second information.

56. The method of any one of claims 45 to 55, wherein the first information indicates the at least one second physical channel occasion in at least one of following manners:
the first information indicates the at least one second physical channel occasion through a bitmap, wherein a bit in the bitmap indicates whether a corresponding physical channel occasion is a second physical channel occasion; and
the first information indicates a third physical channel occasion, and the at least one second physical channel occasion comprises the third physical channel occasion and a physical channel occasion subsequent to the third physical channel occasion within the first cycle.

57. The method of claim 56, wherein a manner in which the first information indicates the at least one second physical channel occasion is determined based on third information, and the third information comprises at least one of:
first configuration information configured by the network device, wherein the first configuration information indicates the manner in which the first information indicates the at least one second physical channel occasion;
a number of second physical channel occasions comprised in the at least one second physical channel occasion; and
a number of physical channel occasions comprised in the first cycle.

58. The method of claim 56 or 57, wherein the first information indicates the at least one second physical channel occasion through the bitmap, the first information comprises a second number of bits, and the second number is determined in at least one of following manners:
being configured by the network device;
being agreed between a terminal device and the network device;
being determined according to a fourth physical channel occasion within the first cycle.

59. The method of claim 58, wherein the second number is determined according to the fourth physical channel occasion within the first cycle,
the second number is a number of physical channel occasions within the first cycle that have a time interval greater than or equal to a first duration from the fourth physical channel occasion; or
the second number is a number of physical channel occasions starting from a fifth physical channel occasion in the first cycle, wherein the fifth physical channel occasion is an earliest physical channel occasion among physical channel occasions within the first cycle that have a time interval greater than or equal to the first duration from the fourth physical channel occasion.

60. The method of any one of claims 56 to 59, wherein the first information indicates the third physical channel occasion, and the first information indicates a first relationship between the third physical channel occasion and a sixth physical channel occasion.

61. The method of claim 60, wherein the sixth physical channel occasion comprises at least one of:
a starting physical channel occasion within the first cycle;
the first physical channel occasion;
an earliest physical channel occasion among physical channel occasions within the first cycle that have a time interval greater than or equal to a first duration from the first physical channel occasion; and
a latest physical channel occasion within the first cycle.

62. The method of claim 60 or 61, wherein the first relationship indicated by the first information comprises at least one of:
a third number, wherein the third number is a number of physical channel occasions by which the third physical channel occasion is offset relative to the sixth physical channel occasion; and
a fourth number, wherein the fourth number is a number of time units by which a first time unit is offset relative to a second time unit, the third physical channel occasion is located in the first time unit, and the sixth channel occasion is located in the second time unit.

63. The method of claim 62, wherein the first information indicates the fourth number and the first time unit comprises at least two physical channel occasions, the third physical channel occasion being an earliest physical channel occasion in the first time unit.

64. The method of claim 62, wherein the first information comprises a fifth number of bits, and the fifth number is determined in at least one of following manners:
being configured by a network device;
being agreed between a terminal device and the network device;
being determined based on the third number;
being determined based on the fourth number; and
being determined according to a fourth physical channel occasion within the first cycle.

65. The method of claim 64, wherein the fifth number is determined according to the fourth physical channel occasion within the first cycle,
the fifth number is a number of physical channel occasions within the first cycle that have a time interval greater than or equal to a first duration from the fourth physical channel occasion; or
the fifth number is a number of physical channel occasions starting from a fifth physical channel occasion in the first cycle, wherein the fifth physical channel occasion is an earliest physical channel occasion among physical channel occasions within the first cycle that have a time interval greater than or equal to the first duration from the fourth physical channel occasion.

66. The method of claim 58, 59, 64 or 65, wherein the fourth physical channel occasion comprises at least one of:
an earliest physical channel occasion within the first cycle;
the first physical channel occasion;
an earliest physical channel occasion among physical channel occasions within the first cycle that have a time interval greater than or equal to a first duration from the first physical channel occasion; and
a latest physical channel occasion within the first cycle.

67. A method for indicating a transmission resource, comprising:
receiving, by a network device in a first physical channel occasion, first information, wherein the first information is for indicating whether a physical channel occasion starting from a second physical channel occasion within a first cycle is used or unused, the first physical channel occasion and the second physical channel occasion are located within the first cycle, and a first time constraint condition is met between the second physical channel occasion and the first physical channel occasion.

68. The method of claim 67, wherein the first time constraint condition comprises:
the second physical channel occasion is an earliest physical channel occasion among physical channel occasions within the first cycle that have a first position with a time interval relative to a second position of the first physical channel occasion being greater than or equal to a first duration; or
the second physical channel occasion is an earliest physical channel occasion among physical channel occasions that have a first position no earlier than a third position subsequent to the first physical channel occasion, and a time interval between the third position and the second position of the first physical channel occasion is greater than or equal to the first duration.

69. The method of claim 68, wherein the first position at least comprises one of:
a start position of the second physical channel occasion; and
a start position of a time slot in which the second physical channel occasion is located.

70. The method of claim 68, wherein the second position at least comprises one of:
an end position of the second physical channel occasion;
an end position of a time-domain symbol occupied by the first information; and
an end position of a time slot in which the second physical channel occasion is located.

71. The method of any one of claims 68 to 70, wherein the first duration comprises a first number of time-domain symbols or time slots.

72. The method of any one of claims 68 to 71, wherein the first duration is configured by a higher-layer signaling or agreed in a protocol.

73. The method of any one of claims 68 to 72, wherein the first duration is related to a subcarrier spacing.

74. The method of any one of claims 67 to 73, wherein the first information is same as configured grant-uplink control information (CG-UCI) in at least one of followings:
a coding mode, a rate matching mode, and a resource mapping mode.

75. The method of any one of claims 67 to 73, wherein receiving, by the network device in the first physical channel occasion, the second information comprises:
receiving, by the network device in the first physical channel occasion, first configured grant-uplink control information (CG-UCI), wherein the first CG-UCI comprises the second information.

76. The method of claim 75, wherein the first CG-UCI comprises a first information field for carrying the first information.

77. The method of claim 75, wherein the first CG-UCI comprises a second information field; and
in a case that the first CG-UCI is scrambled using a first radio network temporary identifier (RNTI), the first information field carries the first information; and in a case that the first CG-UCI is scrambled using a second RNTI, the first information field carries second information; or
in a case that a third information field of the first CG-UCI indicates a first value, the second information field carries the first information; and in a case that the third information field indicates a second value, the second information field carries the second information; or
in a case that the first CG-UCI corresponds to a first time-domain position, the second information field carries the first information; and in a case that the first CG-UCI corresponds to a second time-domain position, the second information field carries the second information.

78. The method of any one of claims 67 to 77, wherein the first information indicates whether the physical channel occasion starting from the second physical channel occasion within the first cycle is used or unused in at least one of following manners:
the first information indicates, through a bitmap, whether the physical channel occasion starting from the second physical channel occasion within the first cycle is used or unused, wherein a bit in the bitmap indicates whether a corresponding physical channel occasion is used or unused; and
the first information indicates a third physical channel occasion, and the third physical channel occasion and a physical channel occasion subsequent to the third physical channel occasion within the first cycle are unused.

79. The method of claim 78, wherein a manner in which the first information indicates whether the physical channel occasion starting from the second physical channel occasion within the first cycle is used or unused is determined based on third information, and the third information comprises at least one of followings:
first configuration information configured by a network device, wherein the first configuration information indicates the manner in which the first information indicates whether the physical channel occasion starting from the second physical channel occasion within the first cycle is used or unused;
a number of physical channel occasions starting from the second physical channel occasion within the first cycle; and
a number of physical channel occasions comprised in the first cycle.

80. The method of claim 78 or 79, wherein the first information indicates, through the bitmap, whether the physical channel occasion starting from the second physical channel occasion within the first cycle is used or unused, the first information comprises a second number of bits, and the second number is determined in at least one of following manners:
being configured by the network device;
being agreed between a terminal device and the network device; and
being determined according to a fourth physical channel occasion within the first cycle.

81. The method of claim 80, wherein the second number is determined according to the fourth physical channel occasion within the first cycle,
the second number is a number of physical channel occasions within the first cycle that have a time interval greater than or equal to a first duration from the fourth physical channel occasion; or
the second number is a number of physical channel occasions starting from a fifth physical channel occasion in the first cycle, wherein the fifth physical channel occasion is an earliest physical channel occasion among physical channel occasions within the first cycle that have a time interval greater than or equal to the first duration from the fourth physical channel occasion.

82. The method of claim 78 or 79, wherein the first information indicates the third physical channel occasion, the first information indicates a first relationship between the third physical channel occasion and a sixth physical channel occasion.

83. The method of claim 82, wherein the sixth physical channel occasion comprises at least one of:
a starting physical channel occasion within the first cycle;
the first physical channel occasion;
an earliest physical channel occasion among physical channel occasions within the first cycle that have a time interval greater than or equal to a first duration from the first physical channel occasion; and
a latest physical channel occasion within the first cycle.

84. The method of claim 82 or 83, wherein the first relationship indicated by the first information comprises at least one of:
a third number, wherein the third number is a number of physical channel occasions by which the third physical channel occasion is offset relative to the sixth physical channel occasion; and
a fourth number, wherein the fourth number is a number of time units by which a first time unit is offset relative to a second time unit, the third physical channel occasion is located in the first time unit, and the seventh channel occasion is located in the second time unit.

85. The method of claim 84, wherein the first information indicates the fourth number and the first time unit comprises at least two physical channel occasions, the third physical channel occasion is an earliest physical channel occasion in the first time unit.

86. The method of claim 84, wherein the first information comprises a fifth number of bits, and the fifth number is determined in at least one of following manners:
being configured by the network device;
being agreed between a terminal device and the network device;
being determined based on the third number;
being determined based on the fourth number; and
being determined according to a fourth physical channel occasion within the first cycle.

87. The method of claim 86, wherein the fifth number is determined according to the fourth physical channel occasion within the first cycle,
the fifth number is a number of physical channel occasions within the first cycle that have a time interval greater than or equal to a first duration from the fourth physical channel occasion; or
the fifth number is a number of physical channel occasions starting from a fifth physical channel occasion in the first cycle, wherein the fifth physical channel occasion is an earliest physical channel occasion among physical channel occasions within the first cycle that have a time interval greater than or equal to the first duration from the fourth physical channel occasion.

88. The method of claim 80, 81, 86 or 87, wherein the fourth physical channel occasion comprises at least one of:
a starting physical channel occasion within the first cycle;
the first physical channel occasion;
an earliest physical channel occasion among physical channel occasions within the first cycle that have a time interval greater than or equal to a first duration from the first physical channel occasion; and
a latest physical channel occasion within the first cycle.

89. A terminal device, comprising:
a first communication unit, configured to transmit, in a first physical channel occasion, first information which is for indicating at least one second physical channel occasion, wherein the first physical channel occasion and the at least one second physical channel occasion are located within a first cycle, the second physical channel occasion is an unused physical channel occasion, and a first time constraint condition is met between the second physical channel occasion and the first physical channel occasion.

90. A terminal device, comprising:
a second communication unit, configured to transmit first information in a first physical channel occasion, wherein the first information is for indicating whether a physical channel occasion starting from a second physical channel occasion within a first cycle is used or unused, the first physical channel occasion and the second physical channel occasion are located within the first cycle, and a first time constraint condition is met between the second physical channel occasion and the first physical channel occasion.

91. A network device, comprising:
a third communication unit, configured to receive, in a first physical channel occasion, first information which is for indicating at least one second physical channel occasion, wherein the first physical channel occasion and the at least one second physical channel occasion are located within a first cycle, the second physical channel occasion is an unused physical channel occasion, and a first time constraint condition is met between the second physical channel occasion and the first physical channel occasion.

92. A network device, comprising:
a fourth communication unit, configured to receive first information in a first physical channel occasion, wherein the first information is for indicating whether a physical channel occasion starting from a second physical channel occasion within a first cycle is used or unused, the first physical channel occasion and the second physical channel occasion are located within the first cycle, and a first time constraint condition is met between the second physical channel occasion and the first physical channel occasion.

93. A terminal device, comprising a processor and a memory, wherein the memory is configured to store a computer program, and the processor is configured to call and run the computer program stored in the memory to perform the method of any one of claims 1 to 22, or the method of any one of claims 23 to 44.

94. A network device, comprising a processor and a memory, wherein the memory is configured to store a computer program, and the processor is configured to call and run the computer program stored in the memory to perform the method of any one of claims 45 to 66, or the method of any one of claims 67 to 88.

95. A chip, comprising a processor configured to call and run a computer program from a memory and run the computer program to enable a device installed with the chip to perform the method of any one of claims 1 to 22, or the method of any one of claims 23 to 44, or the method of any one of claims 45 to 66, or the method of any one of claims 67 to 88.

96. A computer-readable storage medium having stored thereon a computer program that, when run, enables a computer to perform the method of any one of claims 1 to 22, or the method of any one of claims 23 to 44, or the method of any one of claims 45 to 66, or the method of any one of claims 67 to 88.

97. A computer program product comprising computer program instructions that, when run, enable a computer to perform the method of any one of claims 1 to 22, or the method of any one of claims 23 to 44, or the method of any one of claims 45 to 66, or the method of any one of claims 67 to 88.

98. A computer product that, when run, enables a computer to perform the method of any one of claims 1 to 22, or the method of any one of claims 23 to 44, or the method of any one of claims 45 to 66, or the method of any one of claims 67 to 88.
